# EUROPÄISCHE PATENTANMELDUNG

(11) **EP 2 017 791 A1**
(43) Veröffentlichungstag der Anmeldung: **21.01.2009**
(21) Anmeldenummer: 07013466.3
(22) Anmeldetag: 10.07.2007
(51) Int. Cl.: G07B 17/00, B07C 3/00, G06Q 10/00

(54) **Verfahren, Vorrichtung und Logistiksystem zum Befördern einer Postsendung**

(71) Anmelder: Deutsche Post AG, 53113 Bonn (DE)
(72) Erfinder: Meyer, Bernd, 53639 Königswinter (DE); Lang, Dr. Jürgen, 51429 Bergisch Gladbach (DE)
(74) Vertreter: Jostarndt, Hans-Dieter

(57) **Zusammenfassung**

Die Erfindung betrifft ein Verfahren zum Befördern einer Postsendung, wobei ein erster maschinenlesbarer Code auf die Postsendung aufgebracht wird und wobei der maschinenlesbare Code durch mindestens eine Leseeinheit erfasst wird.

Das Verfahren zeichnet sich erfindungsgemäß dadurch aus, dass ein zweiter maschinenlesbarer Code auf die Postsendung aufgebracht wird und dass eine Information zu einer Verknüpfung zwischen dem ersten Code und dem zweiten Code in einem Datenverarbeitungssystem gespeichert wird.

Die Erfindung betrifft ferner eine Vorrichtung zur Durchführung des Verfahrens sowie ein Logistiksystem, welches Mittel zur Durchführung des Verfahrens aufweist.

## Beschreibung

### Technisches Gebiet der Erfindung

Die Erfindung betrifft ein Verfahren zum Befördern einer Postsendung, wobei ein maschinenlesbarer Code auf die Postsendung aufgebracht wird und wobei der maschinenlesbare Code durch mindestens eine Leseeinheit erfasst wird.

Die Erfindung betrifft ferner eine Vorrichtung und ein Logistiksystem zum Durchführen des Verfahrens.

### Stand der Technik

Es ist bekannt, Postsendungen mit einem maschinenlesbaren Code zu versehen und den maschinenlesbaren Code während einer Beförderung von einem Abgangs- zu einem Zielort zu erfassen.

### Darstellung der Erfindung

Aufgabe der Erfindung ist, ein gattungsgemäßes Verfahren so weiterzuentwickeln, dass eine zuverlässige Erfassung und/oder Bearbeitung auf einem möglichst großen Teil des Beförderungsweges vom Abgangsort zum Zielort ermöglicht wird.

Erfindungsgemäß wird diese Aufgabe durch ein Verfahren mit den Merkmalen des unabhängigen Anspruches 1 gelöst. Die Erfindung wird ferner durch eine Vorrichtung zur Bearbeitung von Postsendungen nach Anspruch 25 und ein Logistiksystem nach Anspruch 26 gelöst. Vorteilhafte Weiterbildungen der Erfindung sind Gegenstand der Unteransprüche.

Die Erfindung beinhaltet ein Verfahren zum Befördern einer Postsendung, wobei ein erster maschinenlesbarer Code auf die Postsendung aufgebracht wird und wobei der maschinenlesbare Code durch eine Leseeinheit erfasst wird.

Erfindungsgemäß zeichnet sich dieses Verfahren dadurch aus, dass ein zweiter maschinenlesbarer Code auf die Postsendung aufgebracht wird und dass eine Information zu einer Verknüpfung zwischen dem ersten Code und dem zweiten Code in einem Datenverarbeitungssystem gespeichert wird.

Eine Weiterentwicklung des Verfahrens, der Vorrichtung und des Logistiksystems zeichnet sich dadurch aus, dass der erste Code eine Identifizierungsinformation beinhaltet.

Eine Weiterentwicklung des Verfahrens, der Vorrichtung und des Logistiksystems zeichnet sich dadurch aus, dass der zweite Code eine Identifizierungsinformation beinhaltet.

Eine Weiterentwicklung des Verfahrens, der Vorrichtung und des Logistiksystems zeichnet sich dadurch aus, dass der erste Code und der zweite Code in voneinander getrennten Bearbeitungsvorgängen auf die Postsendung aufgebracht werden.

Eine Weiterentwicklung des Verfahrens, der Vorrichtung und des Logistiksystems zeichnet sich dadurch aus, dass zwischen dem Aufbringen des ersten Codes und dem Aufbringen des zweiten Codes eine Beförderung der Postsendung erfolgt.

Vor, während und/oder nach der Beförderung kann eine Erfassung des ersten Codes erfolgen. Durch das Erfassen des ersten Codes ist es möglich, einzelne oder mehrere der folgenden Funktionen zu realisieren:
Information eines Nutzers über einen Sendungsstatus
   - Information eines Nutzers Ober einen Sendungsstatus,
   - Steuerung eines Bearbeitungsvorgangs,
   - Abrechnung der Postsendung.

Der Begriff "Nutzer" ist in seiner weitesten Bedeutung zu verstehen. Insbesondere umfasst er alle Entitäten, welche eine Versendung von Postsendungen vereinbaren können. Beispielsweise kann es sich hierbei auch um Softwareagenten handeln. Eine Einbeziehung natürlicher oder juristischer Personen ist jedoch gleichfalls möglich.

Nach dem Aufbringen des zweiten Codes auf der Postsendung kann auch der zweite Code erfasst werden.

Durch ein Erfassen des zweiten Codes ist es gleichfalls möglich, die zuvor genannten Funktionen
- Information eines Nutzers über einen Sendungsstatus,
- Steuerung eines Bearbeitungsvorgangs der Postsendung oder/oder
- eine Entgeltabrechnung
zu realisieren.

Es ist zweckmäßig, bei einer oder mehrerer dieser Funktionen eine Verknüpfung zwischen dem ersten Code und dem zweiten Code durchzuführen.

So ist es beispielsweise möglich, einem Nutzer der Postsendung unter Nutzung von zu dem ersten maschinenlesbaren Code zu geordneten Informationen, insbesondere der darin enthaltenen Identifzierungsinformation, Informationen über den Sendungsstatus zu ermöglichen.

Vorzugsweise wird dem Nutzer dies unter Einsatz einer Identifizierungsinformation ermöglicht.

In einer Weiterbildung der Erfindung ist es möglich, die Identifizierungsinformation sowohl in den ersten Code als auch in den zweiten Code einzubringen und gegebenenfalls bei einem Bearbeitungsvorgang der Postsendung durch Erfassen wenigstens eines der beiden Codes zu ermitteln und gegebenenfalls dem Nutzer zur Verfügung zu stellen.

Eine Weiterentwicklung des Verfahrens, der Vorrichtung und des Logistiksystems zeichnet sich dadurch aus, dass der erste Code eine Kennzeichnung beinhaltet, die ihn von dem zweiten Code unterscheidet.

Eine Weiterentwicklung des Verfahrens, der Vorrichtung und des Logistiksystems zeichnet sich dadurch aus, dass der zweite Code eine Kennzeichnung beinhaltet, die ihn von dem ersten Code unterscheidet.

Hierdurch kann eine Vorrichtung zur Erfassung eines maschinenlesbaren Codes so ausgestattet werden, dass sie einfach und zuverlässig erfassen kann, ob es sich bei einem erfassten Code um den ersten Code oder um den zweiten Code handelt.

Eine Weiterentwicklung des Verfahrens, der Vorrichtung und des Logistiksystems zeichnet sich dadurch aus, dass der erste Code von einem anderen Codetyp ist als der zweite Code,

Eine Weiterentwicklung des Verfahrens, der Vorrichtung und des Logistiksystems zeichnet sich dadurch aus, dass der erste Code ein Data-Matrix-Code ist.

Eine Weiterentwicklung des Verfahrens, der Vorrichtung und des Logistiksystems zeichnet sich dadurch aus, dass der zweite Code ein Linearcode ist.

Eine Weiterentwicklung des Verfahrens, der Vorrichtung und des Logistiksystems zeichnet sich dadurch aus, dass der erste Code in einer Bearbeitungseinheit erfasst wird.

Eine Weiterentwicklung des Verfahrens, der Vorrichtung und des Logistiksystems zeichnet sich dadurch aus, dass der zweite Code in einer Bearbeitungseinheit erfasst wird.

Eine Weiterentwicklung des Verfahrens, der Vorrichtung und des Logistiksystems zeichnet sich dadurch aus, dass der erste Code in einer anderen Bearbeitungseinheit erfasst wird als der zweite Code.

Eine Weiterentwicklung des Verfahrens, der Vorrichtung und des Logistiksystems zeichnet sich dadurch aus, dass unter Berücksichtigung der Identifizierungsinformation ein Datensatz mit Daten zur Identifizierung der Postsendung angelegt oder verändert wird.

Eine Weiterbildung der Erfindung sieht einen Einsatz eines Servers vor, der einem Nutzer Daten zu der Postsendung zu Verfügung stellt,

Eine Weiterentwicklung des Verfahrens, der Vorrichtung und des Logistiksystems zeichnet sich dadurch aus, dass der Datensatz mit den Daten zur Identifizierung der Postsendung bei Einlieferung der Postsendung in einem Bearbeitungsverlauf von Postsendungen angelegt oder verändert wird.

Eine Weiterentwicklung der Erfindung sieht vor, dass der Datensatz mit den Daten zur Identifizierung der Postsendung mit den auf der Oberfläche der Postsendung befindlichen erfassten graphischen Informationen auf einer mit dem Nutzerterminal und der Bearbeitungseinheit verbundenen Serverplattform hinterlegt wird.

Eine Weiterentwicklung des Verfahrens, der Vorrichtung und des Logistiksystems zeichnet sich dadurch aus, dass der Datensatz oder wenigstens ein Teil davon einem Nutzer zur Verfügung gestellt wird.

Eine Weiterentwicklung des Verfahrens, der Vorrichtung und des Logistiksystems zeichnet sich dadurch aus, dass der Datensatz auf einem Server hinterlegt wird.

Es ist zweckmäßig, dass der Server dem Nutzer den Datensatz zur Verfügung stellt.

Eine Weiterentwicklung des Verfahrens sieht vor, dass der Datensatz oder wenigstens ein Teil davon dem Nutzer über eine webbasierte Ausgestaltung des Servers zur Verfügung gestellt wird.

Eine Weiterentwicklung der Erfindung zeichnet sich dadurch aus, dass der Datensatz oder wenigstens ein Teil davon dem Nutzer über eine elektronische Benachrichtigung zur Verfügung gestellt wird.

Zur Erhöhung der Datensicherheit ist bei einer Ausführungsform der Erfindung vorgesehen, dass der Datensatz oder wenigstens ein Teil davon kodiert wird und für den Nutzer dekodierbar ist.

Eine Weiterentwicklung des Verfahrens, der Vorrichtung und des Logistiksystems zeichnet sich dadurch aus, dass der Datensatz mit Informationen über einen Beförderungszustand der Postsendung verknüpft wird.

Der Begriff "Beförderungszustand" beinhaltet auch ein Beförderungsergebnis, beispielsweise eine Information über eine Erfassung, Weiterleitung, Übermittlung oder Aushändigung der Postsendung.

Eine Ausgestaltung hiervon sieht vor, dass der Datensatz Daten zum Status der Postsendung, beginnend mit der Einlieferung der Postsendung an einer Einlieferungsstelle, umfasst.

Eine Ausgestaltung hiervon sieht vor, dass der Datensatz bei einem nachfolgenden Erfassen eines der Codes - beispielsweise in einer Bearbeitungseinheit - verändert, insbesondere aktualisiert wird.

Eine Weiterentwicklung des Verfahrens, der Vorrichtung und des Logistiksystems zeichnet sich dadurch aus, dass der Beförderungszustand der Postsendung durch eine Erfassung des ersten Codes ermittelt wird,

Eine Weiterentwicklung des Verfahrens, der Vorrichtung und des Logistiksystems zeichnet sich dadurch aus, dass der Beförderungszustand unter Berücksichtigung einer Erfassung des zweiten Codes ermittelt wird.

Eine Weiterentwicklung des Verfahrens, der Vorrichtung und des Logistiksystems zeichnet sich dadurch aus, dass der Beförderungszustand unter Berücksichtigung der Verknüpfung zwischen dem ersten Code und dem zweiten Code erfolgt.

Eine Weiterentwicklung des Verfahrens, der Vorrichtung und des Logistiksystems zeichnet sich dadurch aus, dass der erste Code mit einer ersten Erfassungsart erfassbar ist und dass der zweite Code mit einer davon verschiedenen Erfassungsart erfassbar ist.

Es ist besonders vorteilhaft, dass eine der Erfassungsarten ein Erfassen von graphisch darstellbaren Code-Bestandteilen beinhaltet.

Beispiele hierfür sind das Erfassen von Strichen eines Strichcodes oder von Modulen eines Data-Matrix-Codes,

Ferner ist es zweckmäßig, dass eine andere der Erfassungsarten ein Erfassen von Transpondersignalen beinhaltet,

Das Erfassen der Inhalte des Transponders erfolgt durch Empfangen von elektromagnetischen Signalen des Transponders; Codeinhalte sind hierbei vorzugsweise in einer in dem Transponder angeordneten Speichervorrichtung gespeichert.

Für einen erfindungsgemäßen Einsatz eignen sich vielfältige Arten von Transpondern. Besonders bevorzugt sind Transponder, die als Sende- und/oder Empfangsgeräte dienen. Insbesondere handelt es sich hierbei um Empfangsgeräte, die nach Empfang eines fremden Signals geeignet sind, ein eigenes Signal abzugeben.

Besonders bevorzugt ist ein Einsatz von Transpondern, die mit wenigstens einer Identifikationsangabe versehen sind. Derartige Transponder werden nachfolgend auch als RFID-Tags bezeichnet,

Es ist zweckmäßig, eine visuell erfassbare Kennzeichnung von Gegenständen in Transport- oder Logistiksystemen durch RFID-Technologien mit elektronisch mehrfach beschreibbaren und auslesbaren Transpondern zu ersetzen oder zu ergänzen. Derartige Systeme haben den Vorteil, dass in einem Transponder eine Vielzahl von Informationen elektronisch ein- und ausgelesen werden kann, wodurch automatische Transport-, Sortier-, Nachverfolgungs- oder Verteilvorgänge gesteuert werden können, ohne dass die visuelle Anzeige von Informationen erforderlich ist.

Ein Transponder mit ldentifikationsangaben (RFID-Tags) wird vorzugsweise als ein RFID-Tag ausgeführt. Ein RFID-Tag besteht aus einem Mikrochip und einer Antenne. Auf dem Chip ist ein Code gespeichert, der verarbeitungsrelevante Informationen enthält. Insbesondere handelt es sich bei den Informationen über Identifikations-ID-Angaben,

Transponder sind so ausgestattet, dass sie auf ein auslösendes (Radio-) Signal eines Lesegerätes selbst Signale senden und/oder empfangen. Aktive Transponder enthalten eine Energieversorgung für ihren Betrieb, Passive Transponder erhalten hingegen Energie durch die von dem Lesegerät ausgesendeten Signale.

Durch entsprechenden Einsatz und gezielte Auswahl beinhaltet die Erfindung ein neuartiges Logistiksystem, das einen Transport von Objekten an vorgesehene Empfänger automatisiert und erheblich vereinfacht.

Bei einem Einsatz von Transpondern als Mittel zur Weiterleitung der Messwerte kommt eine Vielzahl von Lesegeräten in Betracht.

Es werden jeweils auf die Wellenlänge der elektromagnetischen Strahlung der Transponder abgestimmte Antennen eingesetzt.

Die Möglichkeit, mehrere Transponder kurz hintereinander auszulesen, ergibt entsprechende Anforderungen an die jeweils einzusetzende Leseeinheit.

Es ist besonders vorteilhaft, die Leseeinheit mit der aus dem Stand der Technik bekannten BRM-Funktion auszustatten.

Die BRM-Funktion (Buffered Read Mode = Datenfilterung und -speicherung) stellt sicher, dass die Daten bereits ausgelesener Transponder in der Leseeinheit zwischengespeichert und nur einmal ausgelesen werden. Dieser Vorteil kommt bei Anwendungen mit Pulkerkennung (Antikollision) zum Tragen, da immer nur "neue" Transponder ausgelesen werden, So steigt die Übertragungsgeschwindigkeit der Daten.

Die auf diese Weise erfassten Informationen werden anschließend weiter verarbeitet.

Zur Übermittlung an die Leseeinheit sind verschiedene Übermittlungsarten einsetzbar.

Die Leseeinheit ist in einem Transportmittel für die Postsendung, in einem Lager oder einem Bearbeitungszentrum für die Postsendung angeordnet.

Eine Datenverarbeitungseinheit, die vorzugsweise mit der Leseeinheit verbindbar ist, erhält diese Zustandsinformationen von der Leseeinheit.

Eine Weiterentwicklung der Erfindung zeichnet sich dadurch aus, dass durch ein Ortungsmittel in Verbindung mit der Postsendung die Position der Postsendung bestimmt wird und die Position der Postsendung der identifizierungsinformation zugeordnet wird. Dabei kann die Position der Postsendung durch ein Ortungsmittel direkt an der Postsendung oder an einem Transportmittel bestimmt werden, mit welchem die Postsendung transportiert wird. Befindet sich das Ortungsmittel an einem zugehörigen Transportmittel, steht es vorzugsweise in Verbindung mit dem Transponder der Postsendung.

Die Position der Postsendung kann beispielsweise durch ein Ortungsmittel in Form eines GSM-Moduls, eines GPS-Moduls und/oder eines Peilsenders bestimmt werden. Die verschiedenen Ortungsmittel können dabei in Abhängigkeit von einer geforderten Genauigkeit der Positionsbestimmung eingesetzt werden.

Die Erfindung beinhaltet eine Vorrichtung zur Verarbeitung von Postsendungen mit einem Mittel zum Erfassen eines ersten auf eine Postsendung aufgebrachten maschinenlesbaren Codes.

Diese Vorrichtung zeichnet sich dadurch aus, dass die Vorrichtung ein Mittel zum Erfassen wenigstens eines Teils des ersten maschinenlesbaren Codes enthält, dass die Vorrichtung ferner ein Mittel zum Versehen der Postsendung mit einem zweiten maschinenlesbaren Code enthält und dass die Vorrichtung ferner ein Zuordnungsmittel aufweist, dass eine Verknüpfung des ersten Codes mit dem zweiten Code ermöglicht und dass die Vorrichtung ferner mit einer Schnittstelle zum Übertragen der Verknüpfungsinformation an einen Server ausgestattet ist.

Eine Weiterentwicklung des Verfahrens, der Vorrichtung und des Logistiksystems zeichnet sich dadurch aus, dass das Logistiksystem ein Mittel zum Befördern einer Postsendung zu einer Vorrichtung enthält, wobei die Vorrichtung ein Mittel zum Erfassen wenigstens eines Teils eines ersten maschinenlesbaren Codes und ein Mittel zum Versehen der Postsendung mit einem zweiten maschinenlesbaren Code enthält und dass das Logistiksystem ein Zuordnungsmittel beinhaltet, das eine Verknüpfung des ersten Codes mit dem zweiten Code ermöglicht und dass das Logistiksystem ferner einen Server beinhaltet, der so ausgestattet ist, dass er einen Datensatz zur Identifizierung der Postsendung und / oder Informationen über einen Beförderungszustand der Postsendung bereitstellen kann.

Eine Weiterentwicklung des Verfahrens, der Vorrichtung und des Logistiksystems zeichnet sich dadurch aus, dass es wenigstens eine Vorrichtung zur Bearbeitung von Postsendungen nach Anspruch 25 enthält.

Eine Weiterentwicklung des Verfahrens, der Vorrichtung und des Logistiksystems zeichnet sich dadurch aus, dass es mehrere Vorrichtungen enthält und dass der Server so ausgestattet ist, dass er Mittel zum Empfangen von Informationen der Vorrichtungen enthält.

Eine Weiterentwicklung des Verfahrens, der Vorrichtung und des Logistiksystems zeichnet sich dadurch aus, dass es wenigstens eine Vorrichtung mit einem Mittel zum Erfassen wenigstens eines Teils des ersten maschinenlesbaren Codes enthält, dass es ferner wenigstens eine Vorrichtung zum Erfassen wenigstens eines Teil des zweiten maschinenlesbaren Codes enthält und dass der in dem Logistiksystem beinhaltete Server so ausgestattet ist, so dass er ein Mittel zum Empfangen von Informationen von der ersten Vorrichtung und zum Empfangen von Informationen von der zweiten Vorrichtung enthält.

Eine Weiterentwicklung des Verfahrens, der Vorrichtung und des Logistiksystems zeichnet sich dadurch aus, dass es mindestens zwei Transportabschnitte umfasst und dass in einem Transportabschnitt eine Erfassung des ersten Codes mit einer ersten Erfassungsart erfolgt und dass in einem weiteren Beförderungsabschnitt eine Erfassung des zweiten Codes mit einer zweiten Erfassungsart erfolgt.

Ferner ist es zweckmäßig, dass der Datensatz mit den Daten zur Identifizierung der Postsendung bei Einlieferung der Postsendung in dem Bearbeitungsverlauf angelegt oder verändert wird.

Eine Ausführungsform der Erfindung sieht vor, dass der Datensatz mit den Daten zur Identifizierung der Postsendung in einer Bearbeitungseinheit für Postsendungen angelegt oder verändert wird.

Bei der Bearbeitungseinheit handelt es sich beispielsweise um eine Aufstellmaschine, eine Sortiermaschine oder eine Entgeltüberprüfungseinheit.

Eine Aufstellmaschine ist insbesondere eine Vorrichtung, die geeignet ist, Postsendungen so anzuordnen, dass sie auf besonders einfache und zuverlässige Weise in einen Bearbeitungsvorgang einer nachfolgenden weiteren Bearbeitungseinheit eingebracht werden können. Beispielsweise handelt es sich bei der Aufstellmaschine um eine Vorrichtung, welche mehrere Postsendungen - vorzugsweise in gleicher Größe - hintereinander aufstellt. Gegebenenfalls kann hierbei ein Wenden der Postsendung erfolgen, sodass die Oberflächen der Postsendungen, auf denen sich graphische Informationen befinden, gleiche Orientierung aufweisen.

Ferner ist es möglich, dass es sich bei der Bearbeitungseinheit um eine Sortiermaschine handelt.

Für eine Sortierung von Postsendungen - insbesondere von Briefen und Paketen - sind eine Vielzahl von Sortiermaschinen bekannt, Besonders vorteilhaft ist ein Einsatz der Erfindung mit einer Erfassung von graphischen Informationen in einer Sortiermaschine, die so ausgestaltet ist, dass ihr Postsendungen über eine oder mehrere Stoffeingaben zugeführt und an entsprechenden Stellen nach Durchführung von Sortiervorgängen in Behälter abgeworfen werden.

Eine Sortierung erfolgt beispielsweise so, dass einem berücksichtigten Zustellpunkt eine Abwurfstelle/Endstelle der Sortiervorrichtung zugeordnet werden kann.

Es ist gegebenenfalls möglich, eine Entgeltüberprüfung vorzunehmen und das Ergebnis der Entgeltüberprüfung als ein weiteres Sortierkriterium einzusetzen. Hierdurch ist es möglich, Postsendungen, welche nicht ein für ihre Beförderung erforderliches Entgelt aufweisen, aus einem normalen Beförderungsgang auszuschleusen.

Auf diese Weise ist es möglich, die Sortiervorrichtung auch als Entgeltüberprüfungseinheit einzusetzen.

Erfindungsgemäß kann es sich bei der Bearbeitungseinheit für Postsendungen jedoch selbstverständlich gleichermaßen auch um eine separate Entgeltüberprüfungseinheit handeln, die beispielsweise vor oder nach einer Sortiermaschine oder an einer anderen Stelle eines Beförderungsgangs der Postsendungen angeordnet ist. Erfindungsgemäß umfasst ist sowohl die Erfassung des Datensatzes mit den Daten zur Identifizierung der Postsendung bei einer Einlieferung der Postsendung, bei ihrer Beförderung sowie gegebenenfalls bei ihrer Auslieferung, beispielsweise durch Übergabe an einen Empfänger durch Einwurf in eine Einwurfvorrichtung oder durch eine definierte Hinterlegung, beispielsweise in einer gegebenenfalls elektronischen Postfachanlage beziehungsweise in einer elektronischen Paketfachanlage.

Der Datensatz oder ein Teil davon kann dem Nutzer Ober eine webbasierte Serverplattform zur Verfügung gestellt werden.

Ferner ist es zweckmäßig, dass der Datensatz oder ein Teil davon gegebenenfalls in ein anderes Format umgewandelt und dem Nutzer über eine elektronische Benachrichtigung zur Verfügung gestellt wird.

Gegebenenfalls wird das Verfahren so durchgeführt, beziehungsweise das System so ausgestaltet, dass der Datensatz oder wenigstens ein Teil davon codiert wird und für den Nutzer decodierbar ist.

Ferner ist es zweckmäßig, dass der Datensatz oder wenigstens ein Teil davon dem Nutzer in einem Report und/ oder einer Auswertung zur Verfügung gestellt wird.

Eine Weiterentwicklung der Erfindung sieht vor, dass der Datensatz Daten zum Status der Postsendung, beginnend mit der Einlieferung der Postsendung an der Einlieferungsstation, umfasst, die von einer weiteren Bearbeitungseinheit aus verändert, insbesondere aktualisiert, werden.

Die Daten zur Identifizierung der Postsendung werden nachfolgend aus Vereinfachungsgründen als Identifizierungsinformation bezeichnet.

Eine Weiterbildung der Erfindung sieht vor, die Ideritifizierungsinformation sowohl auf die Postsendung aufzubringen als auch an eine Datenverarbeitungseinheit zu übermitteln.

Die ldentifizierungsinformation kann als Mittel zur Abrechnung und/oder zur Bearbeitung der Postsendung eingesetzt werden.

Es ist besonders vorteilhaft, einem Nutzer des Logistiksystems eine einfache und unkomplizierte Erzeugung der Identifizierungsinformation zu ermöglichen. Insbesondere ist es möglich, Identifizierungsinformationen einzusetzen, die zumindest teilweise aus von einem Nutzer eingebbaren und ggf. frei wählbaren Angaben bestehen.

Weiterbildungen der Erfindung sehen vor, nachfolgende Bearbeitungsschritte unter Berücksichtigung der Identifizierungsinformation durchzuführen, Besonders vorteilhaft ist eine Bearbeitung der Identifizierungsinformation im Bereich eines Servers und/oder im Bereich der Bearbeitungseinheit.

Die Erfindung betrifft ferner einen Server, der sich dadurch auszeichnet, dass er mindestens ein Mittel zum Empfangen eines Datensatzes mit Daten zur Identifizierung einer Postsendung aufweist, und dass er mit einem Mittel zum Speichern des Datensatzes zusammenwirkt und dass er mit einer Serverplattform zusammenwirken kann, die den Datensatz oder wenigstens einen Teil davon einem Nutzer zur Verfügung stellen kann.

Die Erfindung beinhaltet Ausführungsformen des Servers und/oder der Bearbeitungseinheit, die es ermöglichen, eine sichere Entgeltabrechnung und/oder Entgeltüberprüfung (Entgeltsicherung) mit einer einfachen Handhabung der Postsendungen durch den Nutzer zu verbinden.

Der Server kann Funktionen zur Nutzerrechtverwaltung, zur Verwaltung von Gebührenbeträgen und/oder zur Abrechnung von Frankierleistungen und/oder unmittelbar der Versandleistungen vornehmen.

Eine Weiterentwicklung des Verfahrens, der Vorrichtung und des Systems sieht vor, dass die Postsendung in ein Logistiksystem eingeliefert wird und dass wenigstens ein in dem Logistiksystem erfolgender Bearbeitungsschritt in Abhängigkeit von der Identifizierungsinformation erfolgt.

Es ist besonders vorteilhaft, dass dieser Bearbeitungsschritt in der Bearbeitungseinheit erfolgt.

Die Positivliste enthält ein Verzeichnis aller Postsendungen, für die eine reguläre Bearbeitung innerhalb des Logistiksystems erfolgt, insbesondere eine Beförderung von einem Einlieferungsort zu einem Zustellort.

Die Erfindung beinhaltet ferner ein neuartiges Logistiksystem, das einen Transport von Postsendungen an vorgesehene Empfänger automatisiert und erheblich vereinfacht.

Die Erfindung betrifft ferner ein System zum Bearbeiten einer Postsendung mit folgenden Komponenten
- einer Empfangsstation zur Entgegennahme der Postsendung,
- einer Bearbeitungseinheit zur Erfassung von auf der Postsendung befindlichen graphischen Informationen,
- einer Serverplattform zum Hinterlegen des Datensatzes mit den Daten.

Dieses System eignet sich insbesondere für eine Durchführung des dargestellten Verfahrens.

Erfindungsgemäß wird ein Logistiksystem bereitgestellt, das sich durch eine besonders hohe Sicherheit und Zuverlässigkeit auszeichnet und das eine besonders einfache und sichere Abrechnung der Postsendung ermöglicht.

Der Begriff Logistiksystem ist im Rahmen der Erfindung in seiner weitesten Bedeutung zu verstehen. Er umfasst insbesondere Systeme, welche Mittel und Einrichtungen enthalten, um den Transport von Postsendungen von Einlieferungsorten zu Zustellorten auf einem Transportweg, vorzugsweise innerhalb eines Postverteilnetzes, durchzuführen.

Eine Fortbildung des Verfahrens, der Vorrichtung und des Logistiksystems zeichnet sich dadurch aus, dass eine Speicherung und/oder Übermittelung der ldentifizierungsinformation durch eine Datenverarbeitungseinheit erfolgt, die mit einem Mittel zum Versehen der Postsendung mit der Identifizierungsinformation gekoppelt ist.

Dies erfolgt beispielsweise dadurch, dass die Datenverarbeitungseinheit mit einem Drucker verbunden ist, der die Postsendung mit der Identifizierungsinformation bedruckt. Es ist jedoch gleichfalls möglich, den Drucker mit einer Schreibeinheit zum Beschreiben eines elektronischen Datenträgers, beispielsweise eines Transponders, zu versehen. Ein derartiges Beschreiben kann beispielsweise kontaktlos durch elektromagnetische Signale erfolgen.

Eine Weiterbildung der Erfindung sieht vor, dass die Identifizierungsinformation auf die Postsendung gedruckt wird.

Eine bevorzugte Ausführungsform der Erfindung zeichnet sich dadurch aus, dass die Identifizierungsinformation auf einen Informationsträger aufgebracht wird, der mit der Postsendung verbindbar ist.

Der Informationsträger kann beispielsweise als ein Aufkleber gestaltet sein. Ferner ist es möglich, dass er ein Sendungsbestandteil ist, beispielsweise indem die Identifizierungsinformation auf ein in die Postsendung eingebrachtes Schreiben aufgedruckt wird.

Durch Erfassen der auf die Postsendung aufgebrachten Identifizierungsinformation ist eine Abrechnung der Postsendung möglich.

Für den Fall, dass eine Erfassung der auf der Postsendung aufgebrachten bzw, mit der Postsendung verbundenen Identifizierungsinformation im Bereich einer Bearbeitungseinheit erfolgt, ist es zweckmäßig, die ldentifizierungsinformation mit abrechnungsrelevanten Daten zu verbinden.

Abrechnungsrelevante Daten sind insbesondere Informationen über einen Absender, einen Empfänger, Abmessungen und Gewicht der Postsendung sowie von dem jeweiligen Nutzer gewünschte Leistungen, beispielsweise eine Eilzustellung.

Eine Weiterbildung der Erfindung sieht vor, diese Informationen auf Grundlage der Identifizierungsinformation zu gewinnen.

Eine weitere Fortentwicklung der Erfindung beinhaltet eine Ermittlung der sendungsrelevanten Daten durch Überprüfung der Postsendung, beispielsweise durch optische Zeichenerkennung (optical character recognitation).

Eine Weiterbildung der Erfindung sieht vor, eine Abrechnung unter Berücksichtigung von ermittelten Werten des Gewichts und/oder der Abmessung der Postsendung durchzuführen.

Diese Ermittlung kann beispielsweise im Bereich der Bearbeitungsstation erfolgen.

Es ist jedoch gleichermaßen möglich, eine Abrechnung auf Grundlage der übermittelten Identifizierungsinformationen durchzuführen.

Bei einer Abrechnung unter Berücksichtigung der übermittelten ldentifizierungsinformationen ist es beispielsweise möglich, von dem jeweiligen Nutzer eingegebene Angaben zu der Sendung zu berücksichtigen, insbesondere zu ihrer Sendungskategorie (Produktkategorie), beispielsweise Standardbrief oder Paket, Gewicht, Abmessungen, Zusatzleistungen wie Nachweispflicht, Eilzustellung, Terminzustellung, Versicherungen, Nachnahme oder CO2-neutraler Transport, die entsprechenden Werte für die Sendungsgrößen und/oder Sendungsgewichte.

Bei einer Auswertung der elektronisch übermittelten Identifizierungsinformation bestehen verschiedene Abrechnungsmöglichkeiten.

Die jeweilige Abrechnung kann auf Grundlage eines Vertrages zwischen dem Logistikunternehmen und dem Nutzer und/oder auf einer Grundlage von beispielsweise öffentlich bekannt gegebenen Nutzungsbedingungen des Logistikunternehmens auch gegenüber nicht registrierten Nutzern erfolgen.

Insbesondere bei registrierten Nutzern ist es zweckmäßig, dass die registrierten Nutzer mit den jeweiligen Identifizierungsinformationen einer Postsendung auch abrechnungsrelevante Daten, beispielsweise die Sendungskategorie oder die jeweilige Beförderungsart, übermitteln.

Eine Erfassung der Sendungskategorie und/oder der Beförderungsart kann im Bereich einer entsprechend umgerüsteten Frankiermaschine erfolgen, so dass beispielsweise Gewichtserfassungsfunktionen der Frankiermaschine genutzt werden können.

Ferner ist so eine unmittelbare Zuordnung zwischen dem ermittelten Gewicht und der Postsendung möglich, indem eine Verbindung der Prozessschritte des Ermittelns der Sendungsdaten und des Aufbringens der Identifizierungsinformation erfolgt.

Durch eine Kombination der Verfahrensschritte der Ermittlung der Sendungsdaten und des Aufbringens der Identifizierungsinformation ist es besonders einfach möglich, diese Daten zusammen zu erfassen.

Dies erleichtert eine nachfolgende Übertragung der Identifizierungsinformation und der ggf. zugehörigen Sendungsdaten und/oder Abrechnungsdaten an den Server.

Die Übertragung kann beispielsweise unmittelbar durch die Frankiermaschine und/oder durch einen Nutzercomputer erfolgen. Beispielsweise handelt es sich hierbei um eine Übermittelung über eine geeignete Datenleitung, beispielsweise eine Telefonverbindung oder eine intemetbasierte Verbindung.

Eine Weiterentwicklung des Verfahrens, der Vorrichtung, des Servers, des Logistiksystems und der Bearbeitungseinheit zeichnet sich dadurch aus, dass in dem Fall, dass die Identifizierungsinformation in einer Positivliste gespeichert ist, eine Weiterverarbeitung der Postsendung erfolgt.

Die Positivliste ist eine Liste, welche aus Entgeltsicherungsgründen angelegt werden kann, Sie enthält Angaben über Postsendungen, die zu einer Beförderung zugelassen sind. Ferner ist es möglich, in der Positivliste Nutzer zu erfassen, für die eine Weiterleitung der Postsendungen vorgesehen ist.

Der Einsatz einer Positivliste hat den Vorteil, dass hierdurch die Gefahr einer missbrauchlichen Nutzung des Logistiksystems durch Postsendungen, für die kein oder kein ausreichendes Entgelt entrichtet wurde, verhindert werden kann.

Erfindungsgemäß ist es jedoch gleichfalls möglich, andere Maßnahmen zur Entgeltsicherung einzusetzen, beispielsweise durch Überprüfen bekannter Sicherheitsmerkmale wie der Überprüfung der Gültigkeit digitaler Informationen oder der Überprüfung der Echtheit von Postwertzeichen.

Eine Weiterentwicklung des Verfahrens, der Vorrichtung, des Servers, des Logistiksystems und der Bearbeitungseinheit zeichnet sich dadurch aus, dass die Weiterverarbeitung einen Transport der Postsendung zu einem vorgesehenen Empfangsort umfasst.

Eine Weiterentwicklung des Verfahrens, der Vorrichtung, des Servers, des Logistiksystems und der Bearbeitungseinheit zeichnet sich dadurch aus, dass die Identifizierungsinformation Angaben zur Identifizierung eines Nutzers enthält.

Eine Weiterentwicklung des Verfahrens, der Vorrichtung, des Servers, des Logistiksystems und der Bearbeitungseinheit zeichnet sich dadurch aus, dass der Nutzer in einem Berechtigungssystem registriert wird.

Eine Weiterentwicklung des Verfahrens, der Vorrichtung, des Servers, des Logistiksystems und der Bearbeitungseinheit zeichnet sich dadurch aus, dass dem Nutzer nach Registrierung in dem Berechtigungssystem eine Zugangsberechtigung zur Übermittelung der Identifizierungsinformation an die Datenverarbeitungseinheit eingeräumt wird.

Eine Weiterentwicklung des Verfahrens, der Vorrichtung, des Servers, des Logistiksystems und der Bearbeitungseinheit zeichnet sich dadurch aus, dass die Identifizierungsinformation zusätzlich zu den Angaben zur Identifizierung des Nutzers weitere Angaben enthält.

Eine Weiterentwicklung des Verfahrens, der Vorrichtung, des Servers, des Logistiksystems und der Bearbeitungseinheit zeichnet sich dadurch aus, dass ein Eingabemittel vorgesehen ist, das es ermöglicht, dass die weiteren Angaben zumindest teilweise durch den Nutzer eingegeben werden.

Eine Weiterentwicklung des Verfahrens, der Vorrichtung, des Servers, des Logistiksystems und der Bearbeitungseinheit zeichnet sich dadurch aus, dass die weiteren Angaben eine Nummer beinhalten, Es kann sich hierbei um eine fortlaufende Nummer handeln, was die Abrechnung erleichtert. Ein Einsatz von fortlaufenden Nummern ist zwar vorteilhaft, jedoch nicht notwendig.

Eine Weiterentwicklung des Verfahrens, der Vorrichtung, des Servers, des Logistiksystems und der Bearbeitungseinheit zeichnet sich dadurch aus, dass bei einem Bearbeitungsvorgang der Postsendung die Identifizierungsinformation aus der Positivliste gelöscht wird.

Eine Weiterentwicklung des Verfahrens, der Vorrichtung, des Servers, des Logistiksystems und der Bearbeitungseinheit zeichnet sich dadurch aus, dass die Postsendung aus einem normalen Beförderungsgang von Postsendungen ausgeschleust wird, wenn die Identifizierungsinformation nicht in der Positivliste gespeichert ist.

Eine Weiterentwicklung des Verfahrens, der Vorrichtung, des Servers, des Logistiksystems und der Bearbeitungseinheit zeichnet sich dadurch aus, dass die an den Server übermittelte Identifizierungsinformation zu einer Abrechnung der Postsendung eingesetzt wird,

Eine Weiterentwicklung des Verfahrens, der Vorrichtung, des Servers, des Logistiksystems und der Bearbeitungseinheit zeichnet sich dadurch aus, dass die auf die Postsendung aufgebrachte Identifizierungsinformation zur Abrechnung der Postsendung eingesetzt wird.

Eine Weiterentwicklung des Verfahrens, der Vorrichtung, des Servers, des Logistiksystems und der Bearbeitungseinheit zeichnet sich dadurch aus, dass ein Abgleich der übermittelten Identifizierungsinformation und der auf der Postsendung aufgebrachten Identifizierungsinformation erfolgt,

Eine Weiterentwicklung des Verfahrens, der Vorrichtung, des Servers, des Logistiksystems und der Bearbeitungseinheit zeichnet sich dadurch aus, dass an den Servers Informationen zur Abrechnung der Postsendung übermittelt werden.

Eine Weiterentwicklung des Verfahrens, der Vorrichtung, des Servers, des Logistiksystems und der Bearbeitungseinheit zeichnet sich dadurch aus, dass Informationen zur Abrechnung unter Berücksichtigung von mit der Postsendung verbundenen Informationen ermittelt werden,

Eine Weiterentwicklung des Verfahrens, der Vorrichtung, des Servers, des Logistiksystems und der Bearbeitungseinheit zeichnet sich dadurch aus, dass abrechnungsrelevante Daten durch eine Überprüfung von physischen Eigenschaften der Sendung ermittelt werden.

Eine Weiterbildung der Erfindung beinhaltet eine Abrechnung anhand der übermittelten Identifizierungsinformation und/oder eine Abrechnung anhand der zusammen mit der Identifizierungsinformation erfassten Sendungsdaten.

Eine Weiterentwicklung des Verfahrens, der Vorrichtung, des Servers, des Logistiksystems und der Bearbeitungseinheit zeichnet sich dadurch aus, dass die Frankiereinheit ein Mittel zur Erzeugung von Identifizierungsinformationen aufweist, dass die Vorrichtung ferner ein Mittel zum Versehen von Postsendungen mit der Identifizierungsinformation enthält und dass die Vorrichtung ferner ein Mittel zur Übertragung der Identifizierungsinformation an einen Netzwerkknoten enthält.

Eine Weiterentwicklung des Verfahrens, der Vorrichtung, des Servers, des Logistiksystems und der Bearbeitungseinheit zeichnet sich dadurch aus, dass die Bearbeitungseinheit ein Mittel zum Erfassen von mit den Postsendungen verbundenen Identifizierungsinformationen enthält und dass die Bearbeitungsstation ferner ein Mittel zur Überprüfung enthält, ob die Identifizierungsinformationen in einer Positivliste gespeichert sind.

Eine Weiterentwicklung des Verfahrens, der Vorrichtung, des Servers, des Logistiksystems und der Bearbeitungseinheit zeichnet sich dadurch aus, dass sie geeignet ist, ein Mittel zu einer Ausschleusung von Postsendungen aus einem Beförderungs- und/oder Bearbeitungsvorgang von Postsendungen beinhaltet.

Eine Weiterentwicklung des Verfahrens, der Vorrichtung, des Servers, des Logistiksystems und der Bearbeitungseinheit zeichnet sich dadurch aus, dass das Logistiksystem ein Mittel zum Empfangen von elektronisch übermittelten Identifizierungsinformationen und zur Speicherung der ldentifizierungsinformationen in einer Positivliste enthält, dass das Logistiksystem ferner ein Mittel zum Überprüfen von auf Postsendungen aufgebrachten ldentifizierungsinformationen enthält und dass das Logistiksystem ein Mittel zur Durchführung einer Überprüfung, ob die auf den Postsendungen aufgebrachten Identifizierungsinformationen in der Positivliste gespeichert sind, enthält.

Die Identifizierungsinformation und ggf. die abrechnungsrelevanten Informationen können auf verschiedene Weise auf die Postsendung aufgebracht werden. Insbesondere ist es möglich, übliche Verfahren zum Bedrucken von Postsendungen einzusetzen.

Bei dem Verfahren handelt es sich um Verfahren zum Bedrucken unter Einsatz von Drucksystemen, die einen Matrixcode auf Sendungen aufbringen und die Transaktionsdaten bis zur Übergabe an das zentrale System gesichert halten. Eine Portoladung im Vorfeld ist nicht erforderlich. Die Abrechnung kann täglich im Nachhinein über eine Schnittstelle zwischen Maschine und Auftragsmanagement erfolgen. Hierbei werden die Informationen aus dem Matrixcode (Nutzernummer, Auftragsnummer, Sendungsnummer) an das Auftragsmanagement übergeben und dort zur weiteren Prüfung und Abrechnung genutzt.

Eine Weiterbildung der Erfindung sieht vor, einem Nutzer, beispielsweise über eine Webseite, Informationen zugänglich zu machen,

Beispielsweisweise wird der Datensatz zu der Postsendung bei Einlieferung und/oder Frankierung der Sendung erstellt und mit einer Sendungsnummer versehen. Der Datensatz kann ein Feld "Status" umfassen, das bei Einlieferung der Postsendung auf "eingeliefert" gesetzt wird.

Die Sendungsnummer kann als Code vorliegen, und die Empfängeradresse als Teil der graphischen Informationen kann beispielsweise mittels OCR (Optical Character Recognition) erfasst werden. Anhand der Sendungsnummer wird der Datensatz zur Postsendung ermittelt, und die erfasste Empfängeradresse wird dem Datensatz zugefügt. Ein Webserver empfängt dann die in dem Datensatz enthaltenen Informationen zu der Empfängeradresse und zeigt sie auf einer entsprechenden Webseite an.

In jedem Fall ist wichtig, dass Daten und/oder Informationen zu einer Postsendung erfasst werden, anhand derer wenigstens eine die Postsendung und/oder den Einlieferer der Postsendung identifizierende Angabe ermittelt wird. Die Sendungsnummer ist hierfür besonders geeignet, doch es sind auch andere Daten zur Identifizierung denkbar.

Zweckmäßig ist es, den Datensatz in einem so genannten Kundendatenmanagement-System (KDM) zu hinterlegen. Der Datensatz kann dann zum Beispiel auch für eine spätere Leistungsabrechnung eines Postunternehmens genutzt werden.

In einer bevorzugten Ausführungsform des Verfahrens ist vorgesehen, dass der Datensatz oder Teile davon dem Nutzer über eine webbasierte Serverplattform zur Verfügung gestellt wird.

Ebenso ist es zweckmäßig, dass der Datensatz oder Teile davon ggf. in ein anderes Format umgewandelt und einem Nutzer über eine elektronische Benachrichtigung zur Verfügung gestellt werden.

Eine elektronische Benachrichtigung kann insbesondere über einen so genannten Push-Prozess übermittelt werden. Beispiele hierfür sind Email, SMS (Short Message Service), MMS (Multimedia Messaging Service), Skype (Internet-Telefonie) und Instant-Messaging (so genannter "Chat").

Eine Umwandlung des Formats des Datensatzes oder Teilen davon kann aus verschiedenen Gründen erfolgen. Insbesondere für die Übermittlung einer Email, SMS und dergleichen ist es jedoch erforderlich, dass beispielsweise digitale Bilddaten in ein einfaches Textformat umgewandelt werden.

In einer weiteren zweckmäßigen Ausbildung des Verfahrens wird der Datensatz oder Teile davon codiert und sind für den Nutzer decodierbar.

So wird sichergestellt, dass nur ein berechtigter Nutzer Zugang zu den Daten einer Postsendung erlangt.

Praktisch erfolgt eine Codierung zum Beispiel in der Weise, dass eine Sendungsnummer als Code auf die Postsendung aufgebracht wird. Besonders bewährt hat sich hierfür der so genannte "Post-Matrix-Code".

Bei diesem Code handelt es sich um einen zweidimensionalen Code, der im Vergleich zu eindimensionalen Barcodes eine deutlich höhere Informationsdichte pro Fläche aufweist. Der Post-Matrix-Code ist darüber hinaus auch geeignet für die Frankierung einer Postsendung und unterliegt einer Norm.

Eine weitere zweckmäßige Ausführungsform des Verfahrens sieht vor, dass der Datensatz oder Teile davon einem Nutzer in einem Report und/oder einer Auswertung zur Verfügung gestellt wird.

Insbesondere Geschäftskunden haben ein Interesse daran, die Daten der in den Verkehr gebrachten Postsendungen besonders aufbereitet angezeigt zu erhalten. Die Aufbereitung kann beispielsweise in einer Aufgliederung nach verschiedenen Empfängeradressen, nach dem Versandstatus, dem Einlieferungsdatum und dergleichen erfolgen.

Besonders zweckmäßig ist es, wenn der Datensatz Daten zum Status der Postsendung umfasst, beginnend mit der Entgegennahme der Postsendung an der Empfangsstation. Diese Daten zum Status können von einer weiteren Bearbeitungseinheit aus verändert, insbesondere aktualisiert, werden. Sobald eine Postsendung vorgegebene Stationen auf ihrem Förderungsweg erreicht, wird beispielsweise ein entsprechender, auf der Postsendung befindlicher Code gescannt und der Status im Datensatz entsprechend aktualisiert. Ein Webserver hat Zugriff auf den Datensatz und gibt den aktualisierten Inhalt für einen Kunden auf einer Webseite an.

Die graphischen Informationen umfassen zweckmäßigerweise Informationen zu einem Adressaten der Postsendung.

Die graphischen Informationen werden vorzugsweise mittels einer Einrichtung zum Scannen erfasst.

Ein Scanner dient beispielsweise zum Einlesen der Adresse, und je nach Scanner-Typ werden die eingelesenen Informationen per Funk oder per Kabel übertragen. Üblich sind hierbei Funkscanner mit mehrzeiligem Display und einer Ausgabemöglichkeit sowie einem Touchscreen und/oder einer Tastatur mit rudimentärer Eingabefunktion.

Bei verschiedenen Scannern wird häufig eine so genannte Scanner-Controller-Komponente verwendet, die eine Schnittstelle zwischen den Scannern und den restlichen Komponenten eines Systems darstellt und die an verschiedenen Orten zu verschiedenen Zeiten eingehende Matrix-Codes von verschiedenen Scannern zur Weiterverarbeitung verwaltet.

Allgemein ist eine Zuordnung der verschiedenen graphischen Informationen auf der Oberfläche der Postsendung zu spezialisierten Lesegeräten von Vorteil. Dabei kann die Erfassung der graphischen informationen durch eine zentrale Bildverarbeitungseinrichtung erfolgen, die über genormte Schnittstellen die speziellen Lesegeräte mit digitalisierten Informationen versorgt.

Beispiele für spezialisierte Lesegeräte sind Geräte, die in den graphischen Informationen enthaltene Codierungen durch Entzifferung des Codes ermitteln. Zum Beispiel dienen derartige spezialisierte Lesegeräte zum Erfassen von Informationen aus digitalen Freimachungsvermerken im bereits oben genannten Post-Matrix-Code.

Eine zusätzliche vorteilhafte Ausführungsform des Verfahrens zeichnet sich dadurch aus, dass die auf der Oberfläche der Postsendung befindlichen und an der Bearbeitungseinheit erfassten graphischen Informationen von einer Bildverarbeitungseinrichtung dahingehend untersucht werden, ob die erfassten graphischen Informationen von vorgegebenen graphischen Informationen abweichen und dass für den Fall einer Abweichung eine Benachrichtigung am Nutzerterminal und an der Bearbeitungseinheit generiert wird.

Dabei kann ein Bearbeitungszentrum für Postsendungen mehrere zentrale Bildverarbeitungseinrichtungen enthalten oder aber eine zentrale Bildverarbeitungseinrichtung kann die graphischen Informationen mehrerer Brief-oder Frachtzentren verarbeiten.

Darüber hinaus kann die Verarbeitung der auf den Postsendungen vorhandenen graphischen Informationen mit Hilfe einer Bildverarbeitungseinrichtung sowohl sequenziell als auch simultan erfolgen. Insbesondere ist es vorteilhaft, das Verfahren mit Hilfe der Bildverarbeitungseinrichtung so durchzuführen, dass vorhandene Bildverarbeitungskapazitäten durch eine wirksame Verteilung der Bildverarbeitungsaufgaben auf verschiedene Komponenten einer zentralen Bildverarbeitungseinrichtung möglichst effektiv genutzt werden.

Der Begriff der Bildverarbeitung, insbesondere der Bildverarbeitungseinrichtung, ist in keiner Weise einschränkend zu verstehen. Insbesondere umfasst der Begriff die Transformation der graphischen Informationen in weitere graphische Informationen, beispielsweise die Umwandlung in ein anderes Format, die Weiterleitung der graphischen Informationen und/oder die Auswertung von in den graphischen Informationen enthaltenen und/oder aus den graphischen Informationen gewonnenen weiteren Informationen, wie dem Lesen einer Empfängeradresse oder dem Entziffern einer in den graphischen Informationen enthaltenen codierten Information. Außerdem beinhaltet der Begriff der Bildverarbeitung auch die Merkmale, die auf dem Gebiet der Bildverarbeitung gelegentlich als Bildinterpretation bezeichnet werden. Hierunter ist beispielsweise das Entziffern von Empfängeradressen durch das Lesen der die Empfängeradresse wiedergebenden graphischen Informationen, beispielsweise in Art einer handschriftlichen Angabe, mit umfasst.

Die Aufgabe der Erfindung wird darüber hinaus durch ein System zum Bearbeiten einer Postsendung mit einem der oben genannten Verfahren gelöst, das die folgenden Komponenten umfasst:
- eine Empfangsstation zur Entgegennahme der Postsendung,
- eine Bearbeitungseinheit zur Erfassung von auf der Postsendung befindlichen graphischen Informationen,
- eine Serverplattform zum Hinterlegen des Datensatzes mit den Daten zur Identifizierung der Postsendung und mit den auf der Postsendung befindlichen erfassten graphischen Informationen, die mit einem Nutzerterminal und der Bearbeitungseinheit verbunden ist und einem Nutzer Daten und/oder Informationen des Datensatzes zur Verfügung stellt.

Bei der Empfangsstation kann es sich beispielsweise um einen Briefkasten, ein Schalterterminal, eine elektronische Brieffachanlage, eine elektronische Paketfachanlage oder eine Drop-Box handeln.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

### Kurze Darstellung der Abbildungen

Von den Abbildungen zeigt:
Fig. 1 eine Prinzipdarstellung einer bevorzugten Ausführungsform der Erfindung und
Fig. 2 eine Prinzipdarstellung einer erfindungsgemäßen Vorrichtung.

### Darstellung der Erfindung anhand der Abbildungen

Nachfolgend wird eine bevorzugte Ausführungsform der Erfindung anhand einer Weiterleitung von Postsendungen über Postsendungsverteilnetze von zwei verschiedenen Logistikunternehmen dargestellt.

Selbstverständlich ist es gleichfalls möglich, die Erfindung auch innerhalb eines einzelnen Logistikunternehmens durchzuführen.

Da ein Einsatz der Erfindung bei einer Kombination von wenigstens zwei verschiedenen Logistiksystemen besonders bevorzugt ist, wird nachfolgend diese Implementation beschrieben.

Es ist beispielsweise möglich, einen Linearcode zusammen mit einem zweidimensionalen (Post-Matrix)-Code auf die Postsendung zu drucken als auch alternative hierzu eine Verknüpfung zwischen dem Post-Matrix-Code und einem später hinzugefügten Linearcode vorzunehmen.

Dies ist sowohl für nationale als auch für internationale Sendungen entsprechend der jeweils vorhandenen Infrastruktur für die Erfassung der Codes sinnvoll, denn die Erfindung kann sowohl für einen nationalen als auch für einen internationalen Versand von Postsendungen eingesetzt werden.

Bei nationalen Briefzusatzleistungen kann die Bearbeitung auf Basis der vorgestellten Frankiervermerke und der Inhalte des maschinenlesbaren Post-Matrix-Codes erfolgen. Auf die Einhaltung internationaler Konventionen für Briefzusatzleistungen (z. B. linearer Barcode) kann verzichtet werden, da die Bearbeitung im eigenen Produktions- und Zustellnetz erfolgt.

Bei internationalen Briefzusatzleistungen sind hingegen internationale Konventionen zu beachten, um anderen Postunternehmen eindeutige Schnittstellen in Form von linearen Barcodes, Nummernkreisen, Prüfziffern etc. zu bieten.

Um bei internationalen Briefzusatzleistungen zu vermeiden, dass in allen Frankiersystemen alternative Vermerke für nationale und internationale Produkte erzeugt werden müssen und um Kundenfreundlichkeit und Effizienz zu optimieren, beinhaltet die Erfindung eine Vorrichtung, die den ersten Code erfassen und einen zweiten Code so erzeugen kann, dass eine Verknüpfung zwischen dem ersten Code und dem zweiten Code ermöglicht wird.

Bei einem Einsatz der Erfindung im internationalen Postverkehr wird dies beispielsweise dadurch ermöglicht, dass in einem für internationale Beförderungen vorgesehenen Logistikzentrum, beispielsweise einem vorhandenen internationalen Briefzentrum über alle Frankierarten hinweg geeignete internationale Kennzeichnungen aufgebracht und elektronisch mit der national verwendeten Frankier-ID verknüpft werden. Dieses Verfahren wird nachfolgend "Umlabeln" genannt.

Durch dieses Verfahren des zentralen Umlabelns können zum einen zahlreiche Sonderprozesse für die einzelnen Frankierarten und zum anderen Fehlerrisiken für den Kunden vermieden werden.

Bei der erfindungsgemäßen Durchführung des Verfahrens ist es zweckmäßig, einzelne, mehrere oder alle der nachfolgenden Prozessschritte durchzuführen:
- Frankierungen mit internationalen Briefzusatzleistungen werden genauso frankiert wie nationale Briefzusatzleistungen.
- Als Identifizierungsinformation wird wie bei nationalen Sendungen die Frankier-ID verwendet (bestehend aus zwei zehnstelligen Zeichenketten).
- Die Premiumleistungen werden ebenso wie bei nationalen Zusatzleistungen im Klartext in einer Sprache des ersten Logistikuntenehmens beschrieben.
- Die Sendung wird eingeliefert und zum internationalen Briefzentrum (IPZ) befördert.
- Im internationalen Briefzentrum wird die Sendung gelesen. Hierbei werden das gewünschte Sendungsprodukt sowie die Frankier-ID aus dem Post-Matrix-Code ermittelt.
- Entsprechend der beinhalteten internationalen Briefzusatzleistungen wird ein geeignetes Label mit unabhängiger Sendungsnummer in einem linearen Barcode und Klartextbezeichnungen gemäß internationaler Vereinbarung aufgebracht. Die Sendung ist anschließend zum internationalen Versand geeignet.
- Die Sendungsnummer dieses aufgebrachten Labels wird in einem zentralen Datenverarbeitssystem mit der zuvor gelesenen Identifizierungsinformation der Frankierung verknüpft.
- Ausländische Postunternehmen bearbeiten die Sendung auf Basis des (einzig vorhandenen) linearen Barcodes.
- Statusinformationen aus dem Ausland, basierend auf der ID des Linearcodes, werden an die Deutsche Post übermittelt.
- Im Datenverarbeitungssystem werden die ausländischen Statusinformationen den nationalen Frankier-IDs zugeordnet.
- Der Kunde kann eine Tracking- und Tracing-Abfrage mit seiner nationalen Frankier-ID ohne jede Kenntnis der im Ausland verwendeten BZL-ID mit einer internationalen Sendungsverfolgung durchführen.

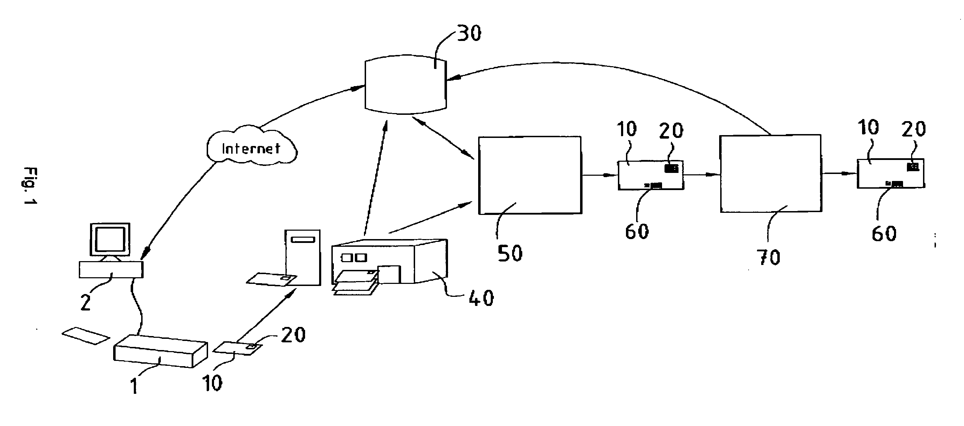

Fig. 1 zeigt eine Prinzipdarstellung eines erfindungsgemäßen Logistiksystems. Das Logistiksystem ermöglicht einer Vielzahl von Nutzern, Postsendungen mit Identifizierungsinformation zu versehen und diese Sendungen zur physischen Beförderung innerhalb des Logistiksystems einzuliefern.

Selbstverständlich ist gleichfalls der Fall umfasst, dass die Postsendungen erst zu einem späteren Zeitpunkt - beispielsweise bei ihrer Einlieferung oder bei einem Erfassungsvorgang- mit der Identifizierungsinformation versehen werden.

Eine besonders bevorzugte Ausführungsform der Erfindung beinhaltet eine Registrierung des Nutzers.

Die Registrierung des Nutzers erfolgt beispielsweise durch eine Eintragung von Identifikationsinformationen und ggf. Sicherheitsmerkmalen des Nutzers in einer Datenbank.

Eine Registrierung des Nutzers ist insbesondere dann vorteilhaft, wenn dem Nutzer Informationen über eine Vielzahl von ihm eingelieferter Postsendungen 10 ermöglicht werden soll. Außerdem ist es durch eine Registrierung des Nutzers möglich, eine Abrechnung von Beförderungsentgelten für die Postsendungen 10 auf besonders einfache und zuverlässige Weise vorzunehmen.

Selbstverständlich ist es jedoch gleichfalls möglich, das Verfahren ohne eine Registrierung des Nutzers durchzuführen.

In diesem Fall ist es zweckmäßig, dass der Kunde Sendungsinformationen über die eingelieferte Postsendung 10 unter Eingabe einer der Postsendung 10 zugeordneten Identifizierungsinformation an einem Server 30 abfragt,

Die Codes eignen sich insbesondere für eine maschinenlesbare Darstellung von Frankierinformationen. Hierbei können sowohl gegenwärtige als auch zukünftige Frankierverfahren eingesetzt werden. Beispiele besonders bevorzugter Ausführungsformen digitaler Frankierverfahren sind die nachfolgenden digitalen Frankierverfahren der Deutschen Post AG:
- Digitalmarke,
- eBriefmarke,
- Frankierservice,
- FRANKIT,
- DV-Freimachung,
- Infopost mit Premiumadress.

Die Codes können jedoch auch auf andere Weise als Nachweis für die Entrichtung eines Beförderungsentgelts eingesetzt werden.

Fig. 1 zeigt ein Logistiksystem, bei dem eine physische Beförderung einer Postsendung 10 von einem Abgangsort zu einem Zielort erfolgt. Die Postsendung 10 ist in diesem Ausführungsbeispiel zur leichteren Darstellbarkeit als ein Brief dargestellt. Es ist jedoch selbstverständlich gleichermaßen von der Erfindung umfasst, dass es sich auch um eine andere Art von Postsendung handeln kann, beispielsweise eine Postkarte oder ein Paket beziehungsweise einen sonstigen in einem Logistiksystem beförderbaren Gegenstand handelt.

Zusätzlich zu der physischen Beförderung der Postsendung 10 erfolgt eine Übertragung von die Postsendung betreffenden Informationen.

Bei den Informationen handelt es sich insbesondere um einen Datensatz mit Daten zur Identifizierung der Postsendung.

Der Datensatz mit den Informationen zur Identifizierung der Postsendung kann an unterschiedlichen Stellen angelegt werden.

So ist es beispielsweise möglich, den Datensatz mit Daten zur Identifizierung der Postsendung in einem Nutzercomputer 2 anzulegen und durch einen Drucker 1 auf die Postsendung aufzubringen.

Die aufgebrachten Informationen werden vorzugsweise als ein erster maschinenlesbarer Code 20 auf die Postsendung aufgebracht.

Eine Ausführungsform der Erfindung umfasst eine Vorabinformation des Logistikunternehmens über eine einzuliefernde Postsendung 10. Dies kann beispielsweise dadurch erfolgen, dass unter Einsatz des Computers 2 des Nutzers und eines Datenübertragungssystems, beispielsweise des Internets, eine Identifizierungsinformation der Postsendung an den Server 30 übermittelt wird.

Es ist jedoch gleichfalls möglich, dass die Identifizierungsinformation erst bei einer Einlieferung der Postsendung in einer Einlieferungsstelle 40 übermittelt wird - beispielsweise einem entsprechend ausgestatteten Briefkasten, einer Postfiliale, einem Postzentrum einem Brief- oder Frachtzentrum, einer elektronischen Paketfachanlage, einer elektronischen Postfachanlage, an einer Drop-Box oder an einer anderen vergleichbaren Vorrichtung.

Selbstverständlich ist es gleichfalls möglich, dass die Identifizierungsinfarmation erst bei einem nachfolgenden Bearbeitungsvorgang der Postsendung, beispielsweise in einer Bearbeitungseinheit, beispielsweise einer Entgeltüberprüfungseinheit oder einer Sortiermaschine erfolgt.

In einer Ausführungsform der Erfindung erfolgt zwischen dem Aufbringen des maschinenlesbaren Codes 20 - beispielsweise im Bereich eines Nutzers oder in einer Einlieferungsstelle 40 - ein Transport der Postsendung 10 zu einer Bearbeitungseinheit 50. Die Bearbeitungseinheit 50 ist eine Vorrichtung zur Bearbeitung von Postsendungen mit mindestens einem Mittel zum Erfassen des ersten auf die Postsendung aufgebrachten maschinenlesbaren Codes.

Die Vorrichtung 50 enthält ein aus Vereinfachungsgründen nicht dargestelltes Mittel zum Erfassen wenigstens eines Teils des maschinenlesbaren Codes. Bei diesem Mittel handelt es sich beispielsweise um eine optische Erfassungseinheit, welche beispielsweise geeignet ist, Module eines Data-Matrix-Codes zu erfassen.

Die Vorrichtung 50 enthält ferner ein gleichfalls aus Vereinfachungsgründen nicht dargestelltes Mittel zum Versehen der Postsendung mit einem zweiten maschinenlesbaren Code.

Bei dem Mittel zum Versehen der Postsendung mit dem zweiten maschinenlesbaren Code handelt es sich beispielsweise um eine Druckeinheit, beispielsweise einen Laserdrucker, einen Tintenstrahldrucker oder einen Thermotransferdrucker. Es ist jedoch gleichfalls möglich, dass das Aufbringen des zweiten Codes dadurch erfolgt, dass ein - gegebenenfalls separat bedruckter - Aufkleber auf die Postsendung 10 aufgebracht wird.

Ferner erfolgt eine Verknüpfung zwischen dem ersten Code 20 und dem zweiten Code 60. Die Verknüpfung zwischen dem ersten Code 20 und dem zweiten Code 60 kann auf unterschiedliche Weise erfolgen.

So ist es beispielsweise möglich, dass in einem Bereich der Vorrichtung 50 der erste Code erfasst wird und dass der zweite Code unter Berücksichtigung in dem ersten Code enthaltener Informationen, beispielsweise einer in dem ersten Code beinhalteten Identifizierungsinformation, erfasst wird.

In dieser Ausführungsform ist es beispielsweise möglich, den zweiten Code so auszugestalten, dass er und der erste Code eine zumindest teilweise übereinstimmende Identifizierungsinformation beinhalten,

In diesem Fall ist es möglich, eine Verknüpfung zwischen dem ersten Code und dem zweiten Code anhand der übereinstimmenden Bestandteile der Identifizierungsinformation durchzuführen.

Die Erfindung beinhaltet jedoch auch Ausführungsformen, bei denen der zweite Code unabhängig von einem Erfassen des ersten Codes erzeugt wird.

In diesem Fall ist es zweckmäßig, eine Zuordnungsinformation zwischen dem ersten Code und dem zweiten Code zu generieren, beispielsweise in einer Konkordanzliste, einer Tabelle oder einer Datenbank,

Vor dem Aufbringen des zweiten Codes 60 können Bearbeitungsvorgänge der Postsendung durch den ersten Code 20 beeinflusst werden.

So ist es beispielsweise möglich zu überprüfen, ob der erste maschinenlesbare Code 20 eine Information enthält, welche als Nachweis für eine Bezahlung der Postsendung gilt, ferner ist es möglich, eine Abrechnung aufgrund des ersten Codes vorzunehmen.

Gegebenenfalls ist es möglich, Postsendungen, bei denen der erste Code 20 keine Angaben über eine Begleichung von Portobeträgen bzw. keine Geldwerteinformation enthält, aus einem üblichen Beförderungsverlauf von Postsendungen auszuschleusen.

Dieses Ausschleusen erfolgt beispielsweise in einer separaten Entgeltüberprüfungseinheit oder gegebenenfalls in einer Sortiereinrichtung, die mit Mitteln zum Erfassen des ersten Codes und einem Mittel zum Auswerten Codeinhalten des ersten Codes ausgestattet ist.

Ferner ist es möglich, auch sonstige Bearbeitungsvorgänge der Postsendung anhand des ersten Codes vorzunehmen und den Code beispielsweise für eine Sortierung und/oder eine Weiterleitung der Postsendung einzusetzen.

Auch eine Information des Nutzers über einen Beförderungszustand der Postsendung erfolgt vor dem Aufbringen des zweiten Codes durch ein Erfassen des ersten Codes.

Beispielsweise wird der erste Code 20 in einer Einlieferungsstelle 40 erfasst.

Ferner ist es möglich, dass eine Erfassung des ersten Codes 20 während eines Transports zu der Vorrichtung 50 - beispielsweise in einem die Postsendung von der Einlieferungsstelle 40 zu der Vorrichtung 50 befördernde Transportmittel -, beispielsweise einem Transportwagen, erfolgt.

Nach einem Aufbringen des zweiten Codes 60 ist es möglich, eine Bearbeitung und/oder Erfassung der Postsendung 10 durch Erfassen des ersten Codes 20 und/oder des zweiten Codes 60 vorzunehmen.

Eine bevorzugte Ausführungsform der Erfindung sieht vor, dass der erste Code 20 und der zweite Code 60 auf unterschiedliche Weise auf die Postsendung aufgebracht sind.

Eine besonders bevorzugte Ausführungsform der Erfindung sieht vor, dass der erste Code 20 und der zweite Code 60 in einem von einander verschiedenen Medium gespeichert sind.

Insbesondere ist es erfindungsgemäß umfasst, dass einer der beiden Codes in einem Transponder gespeichert ist und dass der andere Code auf die Postsendung aufgedruckt ist.

So ist es beispielsweise möglich, dass die Postsendung 10 mit einem Transponder versehen wird, welcher den Code 20 in maschinenlesbarer Form enthält.

Bearbeitungs- und/Erfassungsvorgänge der Postsendung 10 erfolgen in diesem Beispiel durch ein elektromagnetisches Erfassen von Inhalten des - aus Vereinfachungsgründen nicht dargestellten - mit der Postsendung verbundenen Transponders.

Nach dem Aufbringen des zweiten Codes 60 ist es möglich, eine Bearbeitung der Postsendung wahlweise anhand des ersten Codes 20 oder anhand des zweiten Codes 60 vorzunehmen. Auch eine Erfassung von Informationen über den Beförderungszustand der Postsendung ist nach dem Aufbringen des zweiten Codes 60 wahlweise anhand des ersten Codes 20 oder des zweiten Codes 60 möglich.

Eine Bearbeitung und/oder eine Überprüfung eines Status der Sendung erfolgt beispielsweise in der in Fig. 1 dargestellten weiteren Vorrichtung 70. Bei dieser Vorrichtung 70 kann es sich beispielsweise gleichfalls um eine Postbearbeitungseinheit handeln.

Die Vorrichtung 70 befindet sich beispielsweise in einem weiteren Postbearbeitungszentrum, welches vorzugsweise räumlich von einem Postverarbeitungszentrum getrennt ist, in dem sich die Vorrichtung 70 befindet.

In einer bevorzugten Ausführungsform der Erfindung wird in der Vorrichtung 70 wenigstens einer der Codes erfasst.

Das Ergebnis der Erfassung des Codes 60 wird an wenigstens einer, vorzugsweise mehreren oder allen der folgenden Stellen an den Server 30 übermittelt, wobei die Übermittlung des erfassten Codes 60 gegebenenfalls über zwischengeschaltete Systeme - insbesondere unterschiedliche Datenverarbeitungssysteme, gegebenenfalls in verschiedenen Ländern - erfolgt beispielsweise
- bei Erzeugung des ersten Codes - beispielsweise bei einem Bedrucken der Postsendung durch einen Drucker eines Nutzercomputers,
- bei Einlieferung der Postsendung in einer Einlieferungsstelle 40,
- in der Vorrichtung 50,
- in der weiteren Vorrichtung 70,
- in einem Transportmittel für einen Transport der Postsendung oder
- bei einer Auslieferung der Postsendung an einen Empfänger,

Eine besonders bevorzugte Ausführungsform der Erfindung, bei der zuerst der erste Code 20 in einen Transponder eingebracht wird und anschließend die Postsendung mit einem zweiten Code in optisch lesbarer Form - beispielsweise durch Bedrucken oder Aufkleben eines Etiketts - versehen wird - ist eine Beförderung von Postsendungen im internationalen Verkehr.

Bei dieser Ausführungsform verwendet vorzugsweise ein Postunternehmen, bei dem Bearbeitungs- und/oder Sendungserfassungsvorgänge auf Grundlage von im Transponder enthaltenen Informationen erfolgen, für die Beförderung beziehungsweise die Sendungsverfolgung in seinen eigenen Bearbeitungsstationen durch Erfassen des ersten Codes ermittelte Informationen.

Anschließend erfolgt eine Übergabe der Postsendung an ein anderes Postunternehmen, beispielsweise durch Weiterleitung der Postsendung an ein für eine Weiterleitung von Sendungen in das Ausland besonders vorgesehenes Postverteilzentrum, zum Beispiel ein internationales Briefzentrum.

In einer besonders bevorzugten Ausführungsform erfolgt ein Aufbringen des zweiten maschinenlesbaren Codes in dem internationalen Briefzentrum, insbesondere in einer dort angeordneten Vorrichtung zur Bearbeitung von Postsendungen.

Danach erfolgt ein Weitertransport der Postsendung in ein Zielland. In dem Zielland erfolgen Bearbeitungsvorgänge der Postsendung beziehungsweise eine Sendungsverfolgung anhand der in dem zweiten Code 60 enthaltenen Informationen.

Für den Fall, dass der zweite Code 60 in einem Format vorliegt, das durch eine optische Erfassungseinrichtung erkennbar ist- beispielsweise als ein Linearcode oder als ein Data-Matrix-Code -, ist es für Beförderungsvorgänge beziehungsweise Bearbeitungs- beziehungsweise Sendungserfassungsvorgänge bei dem zweiten Postunternehmen möglich, diesen Code maschinell durch optische Erkennung zu erfassen.

Die Erfindung beinhaltet jedoch auch den Fall, dass eine Postsendung zunächst mit einem maschinenlesbaren Code 20 in einer optisch erfassbaren Form - beispielsweise durch Bedrucken der Postsendung beziehungsweise durch Aufkleben eines Sendungsaufklebers auf die Postsendung - versehen wird.

Ein Aufbringen des zweiten Codes erfolgt bei dieser Ausführungsform dann beispielsweise durch Beschreiben eines mit der Postsendung verbundenen Transponders, beziehungsweise durch Verbinden eines Transponders - beispielsweise durch Aufkleben - mit der Postsendung.

Auf diese Weise ist es möglich, dass Benutzer von Postdienstleistungen Postsendungen auf einfache Weise selber beschriften können, beispielsweise durch Bedrucken mit dem ersten Code oder durch Versehen der Postsendung mit Aufklebern, welche den ersten Code 20 enthalten.

Ein Versehen der Postsendung mit dem zweiten Code, der in dieser Ausführungsform in einem Transponder gespeichert wird, beziehungsweise gespeichert ist, erfolgt hierbei an einer örtlich getrennten Stelle, beispielsweise bei der Einlieferungsstelle 40 oder in der Bearbeitungseinheit 50, die sich gegebenenfalls auch im Bereich der Einlieferungsstelle 40 befinden kann.

Ausführungsformen der Erfindung, bei denen der Nutzer der Postsendung zunächst die Postsendung mit einem optisch erfassbaren maschinenlesbaren Code versieht und die Postsendung in einem separaten Vorgang, beispielsweise bei ihrer Einlieferung in einer Einlieferungsstelle mit Transponderinformationen versehen wird, weisen mehrere Vorteile auf.

So ist es möglich, dass ein Nutzer die Postsendung mit vorhandenen Infrastrukturmitteln, insbesondere unter Nutzung seines ohnehin vorhandenen Benutzercomputers 20 und eines vorhandenen Druckers 1 mit dem ersten Code 20 versieht.

Ein Versehen der Postsendung mit den durch Radiofrequenzübertragung auslesbaren und/oder beschreibbaren Informationen als zweiten Code ermöglicht, Bearbeitungsvorgänge der Postsendung anhand der in dem Transponder enthaltenen Informationen vorzunehmen.

Diese Ausführungsform ist insbesondere dann bevorzugt, wenn Postsendungen besonders einfach und zuverlässig erfasst werden sollen.

Außerdem ist es möglich, durch ein Versehen von Postsendungen mit Transpondern und mit dem Speichern von Codes in den Transpondern möglich, Bearbeitungsvorgänge der Bearbeitungs- und/oder Erfassungsvorgänge der Postsendung durch Erfassen von Inhalten des Transponders durchzuführen.

Eine Erfassung von Inhalten der Transponder kann gegebenenfalls berührungslos und im Abstand von der Postsendung durch geeignete Leseeinrichtungen erfolgen.

Hierdurch ist es möglich, den Bearbeitungsvorgang der Postsendungen wesentlich zu beschleunigen.

Eine besonders bevorzugte Ausführungsform des Servers zeichnet sich dadurch aus, dass er mit einer Schnittstelle zur Eingabe von versandrelevanten Informationen verbunden ist.

Bei den versandrelevanten Informationen handelt es sich beispielsweise um Absenderdaten und/oder Empfängerdaten.

Ferner ist es zweckmäßig, dass der Server mit einer Schnittstelle zur Eingabe von frankierrelevanten Informationen verbunden ist.

Zweckmäßigerweise enthalten die frankierrelevanten Informationen Spezifikationen des Gegenstands - nachfolgend auch Versandprodukt genannt - und/oder Informationen, ob das Versandprodukt
- noch bezahlt werden muss oder
- bereits bezahlt ist.

Zur Sammlung von Postgütern sind Sammelbehälter bekannt, die beim Einwerfen von Postsendungen eine Aufbewahrung der Postsendungen ermöglichen und außerdem einen Zugriff auf bereits eingeworfene Sendungen verhindern sollen. Bei Briefkästen ist der Einwurfschlitz üblicherweise so schmal ausgebildet, dass ein Zugriff auf eingeworfene Briefe nicht möglich ist.

Auch im Bereich der Sammlung von größeren Postgutern wie Paketen und Päckchen ist es bekannt, Behälter zur Sammlung dieser Güter einzusetzen.

Eine Einlieferung größerer Sendungsmengen erfolgt zweckmäßigerweise an anderen geeigneten Einlieferungsstellen, beispielsweise Filialen des Logistiksystems oder unmittelbar im Bereich von Bearbeitungseinheiten des Logistiksystems.

Es wird eine Identifizierungsinformation einer Postsendung eingelesen.

Das Einlesen der Identifizierungsinformation erfolgt beispielsweise in einem Briefzentrum. Zum Einlesen der Identifizierungsinformation wird eine Bearbeitungseinheit eingesetzt. Es ist sowohl möglich, hierfür eine eigene Bearbeitungseinheit bereitzustellen, beispielsweise durch eine Vorrichtung, welche geeignet ist, Oberflächen von Postsendungen zu überprüfen und/oder in Transpondern enthaltene Informationen zu lesen.

Es ist jedoch gleichfalls möglich, dass das Einlesen der Identifizierungsiriformation der Postsendung in einer für andere Bearbeitungsvorgänge der Postsendung vorgesehenen Bearbeitungseinheit erfolgt, beispielsweise in einer Aufstellmaschine oder in einer Sortiermaschine.

Eine besonders bevorzugte Form des Servers zeichnet sich dadurch aus, dass er enthält:
- wenigstens einen äußeren Konnektor zum Empfangen einer Dienstanforderung, deren Erzeugung in einem Server eines Nutzers initiierbar ist, und zum Übermitteln eines ermittelten Bearbeitungsergebnisses an den Nutzercomputer,
- innere Konnektoren, die von dem Server getrennt sind. Insbesondere werden damit auch Anpassungen von inneren Konnektoren während des laufenden Betriebs des Servers möglich, indem der anzupassende äußere Konnektor von dem Server getrennt, angepasst und wieder mit dem Server verbunden wird.

In einer vorteilhaften Ausgestaltung der Erfindung umfasst der Server eine Autorisier- und Authentifiziereinheit zum Überprüfen der Berechtigung des Nutzers zum Zugriff auf die in diesem Anmeldetext dargestellten Daten und Informationen.

Mittels der Autorisier- und Authentifiziereinheit kann die Berechtigung des Nutzers bereits in dem Server überprüft werden. Ferner kann auch eine Überprüfung der Zugriffsberechtigung für mehrere Dienste des Dienstanbieters erfolgen, so dass ein so genanntes Single sign-on, d,h, eine zentrale Autorisierung für mehrere Dienste ermöglicht wird,

Die Erfindung beinhaltet ein Logistiksystem zum Befördern einer Postsendung auf einem Transportweg innerhalb eines Postverteilnetzes, wobei der Transportweg mehrere Knoten des Postverteilnetzes enthält, insbesondere einen Knoten, der einem Zustellpunkt entspricht, sowie wenigstens einen Knoten, der einem Sortierpunkt entspricht.

Der Begriff Logistiksystem umfasst insbesondere Systeme, welche die erforderlichen Mittel und Einrichtungen enthalten, um den Transport von Postsendungen von einem Abgangsort zu einem Zustellpunkt auf einem Transportweg innerhalb eines Postverteilnetzes durchzuführen.

Bei dem Abgangsort handelt es sich beispielsweise um einen Lagerort oder Einlieferungsort der zu transportierenden Postsendung.

Der Zustellpunkt wird vorzugsweise von dem Nutzer ausgewählt.

In einer bevorzugten Ausführungsform der Erfindung ist es vorgesehen, dass die Überprüfung der Berechtigung des Nutzers anhand eines Berechtigungsprofils durchgeführt wird.

Anhand der Berechtigungsprofile, insbesondere anhand der Nutzerberechtigungsprofile, kann vorteilhaft der Umfang, in dem ein Nutzer des Logistiksystems Frankierdienste des Dienstanbieters in Anspruch nehmen kann, überprüft bzw. festgestellt werden. Dabei kann das Berechtigungsprofil nutzerbezogen vorgegeben werden, so dass für unterschiedliche Nutzer unterschiedliche Berechtigungen zur Inanspruchnahme eines Frankierdienstes vorgesehen werden können.

Vorzugsweise enthält die Dienstanforderung eine Information, die mit einem dem Internetmarktplatz eindeutig zugeordneten Schlüssel verschlüsselt und in der Autorisier- und Authentifiziereinheit entschlüsselbar ist,

Anhand der verschlüsselten Information mit einem dem Nutzer eindeutig zugeordneten Schlüssel kann somit die Authentizität der Dienstanforderung festgestellt werden.

In einer weiteren bevorzugten Ausführungsform der Erfindung ist es vorgesehen, dass das Nutzerberechtigungsprofil in der Dienstanforderung enthalten ist.

Durch das Einbringen des Nutzerberechtigungsprofils in die Dienstanforderung, kann somit in der Dienstanforderung der Umfang angegeben werden, in dem der Nutzer Frankierdienste des Dienstanbieters nutzen kann.

Vorzugsweise ist es dabei vorgesehen, dass das Nutzerberechtigungsprofil mit einem dem Nutzer eindeutig zugeordneten Schlüssel verschlüsselt ist oder mit einer digitalen Signatur des Nutzers versehen ist.

Auf diese Weise kann die Authentizität des Nutzerberechtigungsprofils in dem Server überprüft werden.

In einer weiteren vorteilhaften Ausführungsform der Erfindung ist es vorgesehen, dass die Autorisier- und Authentifiziereinheit das Nutzerberechtigungsprofil in Abhängigkeit von dem in dem Anbieterserver ermittelten Bearbeitungsergebnis verändern kann.

Hierdurch kann das Berechtigungsprofil eines Nutzers in Abhängigkeit von der Inanspruchnahme eines bestimmten Frankierdienstes des Dienstanbieters verändert werden.

Vorzugsweise ist es dabei vorgesehen, dass die Autorisier- und Authentifiziereinheit das Nutzerberechtigungsprofil in Abhängigkeit einer Anzahl von für einen Nutzer ermittelten Bearbeitungsergebnissen verändern kann,

Eine Vielzahl von Ausführungsformen ermöglicht eine Überprüfung der Berechtigung des Nutzers, Sendungen für eine Beförderung mit dem Logistiksystem einzuliefern.

In einer weiteren vorteilhaften Ausgestaltung der Erfindung ist es vorgesehen, dass der Server eine Berichtseinheit zum Erfassen und Auswerten der Dienstanforderungen und der Bearbeitungsergebnisse aufweist.

Vorteilhafte Weiterbildungen der Erfindung im Hinblick auf das Verfahren entsprechen den im Zusammenhang mit dem Server beschriebenen Ausführungsformen der Erfindung.

Weitere Eingabemöglichkeiten sind z.B. die schriftliche Erfassung und spätere Digitalisierung, beispielsweise durch eine Dienstleistungseinheit.

Vorzugsweise erfolgt die Datenübergabe über eine Schnittstelle in Form eines spezifizierten Parameter-Sets bzw. nach einer spezifischen Konvention eines festgelegten Datensatzes an den Frankierdienst.

Eine besonders bevorzugte Implementierung der Erfindung soll an dem Ausführungsbeispiel eines Servers erläutert werden, der im Folgenden als Server bezeichnet wird.

In einem Fall ist der Server so gestaltet, dass Nutzer mittels Nutzercomputern zugreifen können,

Eine direkte Verbindung zwischen den Nutzercomputern und dem Server ist nicht erforderlich, jedoch möglich.

In dem bevorzugten Fall sind die Nutzercomputer mit dem Server verbunden, so dass ein Datenaustausch unmittelbar zwischen den Computern und dem Server erfolgen kann.

Der Zugriff auf den Server kann über das Internet, beispielsweise auf einer Webseite des Nutzers, die von dem Server bereitgestellt wird und mit einem Browserprogramm versehen ist, das in den Nutzercomputern ausgeführt und an einem Anzeigemittel der Nutzercomputer dargestellt wird.

Der Server enthält in einer vorteilhaften Ausführungsform der Erfindung äußere Konnektoren, die mit den Nutzercomputern über ein Kommunikationsnetzwerk, vorzugsweise das Internet, verbunden sind. Die äußeren Konnektoren sind in Konnektorsteckplätze des Servers eingesetzt.

Innerhalb des Servers besteht eine Verbindung zwischen den äußeren Konnektoren und einer Autorisier- und Authentifiziereinheit, die ihrerseits mit einer Transformationseinheit in Verbindung steht. Für eine direkte Datenübertragung zwischen den äußeren Konnektoren und der Transformationseinheit kann die Autorisier- und Authentifiziereinheit überbrückt werden.

Die Transformationseinheit ist mit einer Prüfeinheit verbunden, die ihrerseits mit inneren Konnektoren in Verbindung steht. Auch hier kann eine direkte Verbindung zwischen der Transformationseinheit und den inneren Konnektoren geschaffen werden, bei welcher die Prüfeinheit überbrückt wird.

Ferner umfasst der Server eine Steuer- und Berichtseinheit zur Administrierung des Servers und zur Protokollierung.

Der Server kann als Hardware oder als Software ausgebildet sein. In einer vorteilhaften Ausführungsform der Erfindung wird er dabei in Form mehrerer Softwaremodule realisiert, die in einem Internetserver ausgeführt werden.

Die Anforderung der Frankierdienste wird mittelbar oder unmittelbar auf einer Webseite beispielsweise durch die Betätigung einer auf der Webseite angeordneten Schaltfläche initiiert. Insbesondere können auch Webseiten, die bei der Ausführung des Dienstes gegebenenfalls als Bearbeitungsergebnis bzw. Teil-Bearbeitungsergebnis angezeigt werden, dem Erscheinungsbild der Webseiten in einfacher Weise durch den Server angepasst werden.

Zur Anbindung einer Vielzahl von Nutzern verfügt der Server über eine Vielzahl von Konnektorsteckplätzen zur Aufnahme von äußeren Konnektoren. Dabei ist es möglich, äußere Konnektoren im laufenden Betrieb des Servers einzustecken und zu entfernen, so dass ein unterbrechungsfreier Betrieb des Servers möglich ist. Bei Änderungen, die an einem äußeren Konnektor durchgeführt werden, kann dieser ebenfalls im aktivierten Zustand des Servers entfernt, angepasst und wieder eingesteckt werden, so dass auch hier keine Betriebsunterbrechung des Servers erforderlich ist.

Eine Dienstanforderung wird von dem Server an demjenigen äußeren Konnektor empfangen, der dem entsprechenden Nutzer zugeordnet ist, und es wird gegebenenfalls eine Formatänderung der vorgenannten Art vorgenommen,

Von einem äußeren Konnektor wird die Dienstanforderung innerhalb des Servers an eine Authentifizier- und Autorisiereinheit übergeben, die zunächst in einem Authentifizierungsschritt überprüft, ob Frankierdienste des Dienstanbieters grundsätzlich genutzt werden dürfen. Die Authentifizierung erfolgt dabei auf der Basis der Identität des Nutzers.

Die Authentifizierung geschieht anhand von Authentifizierungsinformationen, die in der Dienstanforderung enthalten sind und deren Authentizität durch den Einsatz kryptographischer Verfahren sichergestellt wird. Geeignete kryptographische Verfahren sind beispielsweise digitale Signaturen der Dienstanforderung oder eines Teils davon. Ebenso kommt es in Frage, dass Inhalte der Dienstanforderung mit einem dem Internetmarktplatz oder dem Nutzer zugeordneten Schlüssel (asymmetrische Verschlüsselung mit zertifizierten Schlüsseln) oder mit einem im Vorfeld zwischen dem Server und dem Internetmarktplatz bzw. dem Nutzer ausgetauschten symmetrischen Schlüssel (symmetrische Verschlüsselung mit "preshared key") verschlüsselt sind.

Ist eine erfolgreiche Authentifizierung nicht möglich, bedeutet dies, dass es sich nicht um eine authentische Dienstanforderung des Nutzers eines registrierten Internetmarktplatzes handelt oder dass der Nutzer aus anderen Gründen nicht zur Inanspruchnahme von Frankierdiensten des Dienstanbieters berechtigt ist. In diesem Fall erzeugt die Autorisier- und Authentifiziereinheit eine Fehlermeldung, die Ober den äußeren Konnektor an den Nutzercomputer übermittelt wird. Ferner kann eine Protokollierung der Dienstanforderung mittels der später erläuterten Steuer- und Berichtseinheit vorgesehen sein.

Nach erfolgreicher Authentifizierung stellt die Authentifizier- und Autorisiereinheit in einem Autorisierungsschritt die Berechtigung des Nutzers zur Nutzung von Frankierdiensten fest. Dabei wird geprüft, welche Frankierdienste in welchem Umfang durch den Nutzer genutzt werden dürfen. Dies erfolgt ebenfalls auf der Basis der Identität des Nutzers.

Die Autorisierung eines Nutzers erfolgt anhand eines Nutzerberechtigungsprofils, das vorzugsweise in der Authentifizier- und Autorisiereinheit hinterlegt ist. Das Nutzerberechtigungsprofil enthält dabei Angaben darüber, in welchem Umfang Frankierdienste von dem Nutzer in Anspruch genommen werden können, d.h. welche Funktionen innerhalb des Frankierdienstes von dem Nutzer ausgeführt werden können.

Die Autorisierung eines Nutzers erfolgt vorzugsweise anhand eines Nutzerberechtigungsprofils in der Dienstanforderung, das ebenfalls kryptographisch abgesichert ist. Das Nutzerberechtigungsprofil wird vorzugsweise von einem Server bzw. ein in die Webseite des lnternetmarktplatzes eingebettetes Skript in die Dienstanforderung eingebracht, oder es ist in dem Server in einer Datenbank hinterlegt. In dem Nutzerberechtigungsprofil ist dabei angegeben, in welchem Umfang der Nutzer Frankierdienste des Dienstanbieters in Anspruch nehmen kann. Auf diese Weise können die Nutzer des Internetmarktplatzes mit unterschiedlichen Zugriffsrechten für die Frankierdienste des Dienstanbieters ausgestattet werden.

Zur Durchführung der Autorisierung prüft die Autorisier- und Authentifiziereinheit anhand des Nutzerberechtigungsprofils, ob und in welchem Umfang der Nutzer zur Inanspruchnahme des angeforderten Frankierdienstes oder der angeforderten Frankierdienste berechtigt ist. Ergibt die Prüfung, dass der Nutzer keine Berechtigung zur Inanspruchnahme des angeforderten Frankierdienstes oder der angeforderten Frankierdienste besitzt, wird vorzugsweise eine Fehlermeldung erzeugt und über den äußeren Konnektor an den Nutzercomputer des Nutzers übermittelt.

Die Transformationseinheit nimmt die Dienstanforderung gegebenenfalls zusammen mit den ermittelten Berechtigungsinformationen von der Authentifizier- und Autorisiereinheit entgegen. Abhängig von dem Inhalt der Dienstanforderung und gegebenenfalls abhängig von den in der Authentifizier- und Autorisiereinheit ermittelten Berechtigungsinformationen wird die Dienstanforderung durch die Transformationseinheit konvertiert. Da die Konvertierung im Gegensatz zu der statischen Formatänderung, die in den äußeren Konnektoren vorgenommen wird, in Abhängigkeit von dem Inhalt der Dienstanforderung durchgeführt wird, wird sie hier auch als intelligente Konvertierung bezeichnet.

In der Transformationseinheit werden zur intelligenten Konvertierung Prozesse ausgeführt, die eine Weiterleitung der Dienstanforderung an das betreffende auf einem der Anbieterserver ausgeführte Dienstprogramm ermöglichen. In dem Fall, dass mit einer Dienstanforderung mehrere Frankierdienste angefordert werden, erfolgt für jeden der Dienste eine Weiterleitung der Dienstanforderung oder des betreffenden Teils der Dienstanforderung an einen Anbieterserver in der im Folgenden beschriebenen Weise.

Die Transformationseinheit unternimmt dabei ein so genanntes Routing der Dienstanforderung, d.h. abhängig von ihrem Inhalt wird der Anbieterserver ermittelt, auf dem das Dienstprogramm zur Ausführung des angeforderten Frankierdienstes ausgeführt wird, und die Dienstanforderung wird an diesen Anbieterserver adressiert. Ferner erfolgen weitere intelligente Konvertierungen, wie beispielsweise eine Veränderung und Ergänzung von in der Dienstanforderung enthaltenen Daten.

Bei den intelligenten Konvertierungen kann es sich beispielsweise auch um Korrekturen handeln, die sich nach Plausibilitätsprüfungen oder nach einer Anwendung von Parsing-Regeln, d.h. von Regeln zur Interpretation der Dienstanforderung, ergeben. Werden beispielsweise bei einem Frankierdienst zur Erstellung von Adressetiketten Postfachinformationen in einem Datenfeld erkannt, das zur Bezeichnung der Straße vorgesehen ist, so kann dies von der Transformationseinheit korrigiert werden.

Ebenso ist es im Rahmen der intelligenten Konvertierung möglich, Dienstanforderungen so zu verändern, dass statt des angeforderten Frankierdienstes ein aktuellerer, verbesserter oder günstigerer Dienst (beispielsweise im Rahmen einer Sonderaktion) ausgeführt wird.

In einer bevorzugten Ausführungsform der Erfindung ist darüber hinaus ein so genanntes dynamisches Routing vorgesehen, bei dem die Verfügbarkeit der Anbieterserver ermittelt und der Dienstanforderung an einen Anbieterserver adressiert wird, für den die Verfügbarkeit festgestellt wird. Ferner kann es auch vorgesehen sein, dass mittels der Transformationseinheit ein so genanntes Load Balancing vorgenommen wird, bei dem neben der Verfügbarkeit auch die Auslastung des Servers festgestellt und die Dienstanforderung an den Anbieterserver mit der geringsten Auslastung übermittelt wird.

Nach der Bearbeitung in der Transformationseinheit wird die Dienstanforderung über eine Prüfeinheit oder direkt an den inneren Konnektor übermittelt, der mit dem ermittelten Anbieterserver verbunden ist.

In einer bevorzugten Ausführungsform der Erfindung ist es dabei zudem vorgesehen, dass zusammen mit der Dienstanforderung eine authentische Zusatzinformation, beispielsweise eine verschlüsselte Information, von der Transformationseinheit an den Anbieterserver übermittelt wird. Die Zusatzinformation wird dabei mit einem der Transformationseinheit bzw. dem Server eindeutig zugeordneten Schlüssel in dem Anbieterserver entschlüsselt, um zu überprüfen, ob die Dienstanforderung von dem Server stammt. Auf eine zusätzliche Authentifizierung und/oder Autorisierung des Markplatznutzers in dem Anbieterserver kann damit in dieser Ausführungsform der Erfindung verzichtet werden.

Die inneren Konnektoren sind in der Lage, statische Formatänderungen des Dienstprogrammaufrufs vorzunehmen und sind über Konnektorsteckplätze mit dem Server verbunden, in die bei laufendem Betrieb innere Konnektoren eingesteckt und aus denen bei laufendem Betrieb innere Konnektoren ausgesteckt werden können.

Aufgrund der Funktionsweise der inneren Konnektoren ist bei einer Anpassung der Dienstprogramme auf den Anbieterservem lediglich eine Anpassung der Konnektoren, nicht jedoch eine Anpassung der Transformationseinheit erforderlich. Ferner können derartige Anpassungen auch bei laufendem Betrieb des Servers vorgenommen werden, indem die betroffenen inneren Konnektoren während der Anpassung ausgesteckt werden.

Über die inneren Konnektoren wird die Dienstanforderung dem ermittelten Anbieterserver übermittelt, Dies geschieht vorzugsweise über ein Netzwerk wie das Internet oder - wenn der Server von dem Dienstanbieter selbst betrieben wird - über ein internes Datennetzwerk des Dienstanbieters.

Nach der Bearbeitung der Dienstanforderung in dem auf dem Anbieterserver ausgeführten Dienstprogramm, d.h. nach der Ausführung des Dienstes, sendet der Anbieterserver das Bearbeitungsergebnis, d.h. die in dem Anbieterserver bei der Ausführung des Frankierdienstes bzw. des Dienstprogramms ermittelten Daten zurück an den Server, wo es wiederum von dem inneren Konnektor empfangen wird.

Nach dem Empfang und nach der Durchführung von gegebenenfalls vorzunehmenden Formatänderungen innerhalb des inneren Konnektors wird das Bearbeitungsergebnis an die Prüfeinheit übergeben, in der eine formale Überprüfung des Bearbeitungsergebnisses vorgenommen wird. Dabei wird geprüft, ob das Bearbeitungsergebnis vollständig und formal korrekt ist. Im Hinblick auf die Vollständigkeit wird dabei beispielsweise bei einer Anforderung eines digitalen Frankiervermerks durch einen Nutzer überprüft, ob das Bearbeitungsergebnis eine Druckvorlage bzw. eine Druckvorschau des Frankiervermerks umfasst. Die Kriterien zur Überprüfung sind für die Bearbeitungsergebnisse der verschiedenen Anbieterserver in einer Datenbank des Servers hinterlegt.

Sind Vollständigkeit oder Korrektheit nicht gegeben, so wird anstelle des Bearbeitungsergebnisses oder zusätzlich zu dem Bearbeitungsergebnis eine Benachrichtigung an den Nutzercomputer des Nutzers übermittelt, in der auf einen Fehler hingewiesen wird.

Die Prüfeinheit ist auch in der Lage, die Verfügbarkeit der Anbieterserver zu prüfen und das Ergebnis der Transformationseinheit mitzuteilen, so dass diese auf der Basis der ÜberprOfungsergebnisse das beschriebene dynamische Routing von Dienstanforderungen vornehmen kann.

Das geprüfte Bearbeitungsergebnis wird innerhalb des Servers entweder über die Transformationseinheit oder unter Umgehung der Transformationseinheit an den äußeren Konnektor geleitet, der mit dem Internetmarktplatz verbunden ist, von dem ursprünglich die Dienstanforderung stammt.

Eine weitere Bearbeitung des Bearbeitungsergebnisses in dem Server ist dann notwendig, wenn neben einer Weiterleitung des Bearbeitungsergebnisses an den Nutzercomputer des Nutzers bzw. an einer Konsolidatorquelle eine intelligente Verarbeitung des Bearbeitungsergebnisses vorgenommen werden soll.

Die Erzeugung der Benachrichtigung wird dabei in der Transformationseinheit vorgenommen. Gegenstand der Benachrichtigung kann dabei beispielsweise eine Angabe darüber sein, dass eine Postsendung befördert wurde oder auf dem Weg von A nach B ist.

Auf diese Weise kann das Ergebnis des Dienstes auch von der Streuquelle an den Nutzercomputer übermittelt werden.

Nach der optionalen Bearbeitung des Bearbeitungsergebnisses durch die Transformationseinheit wird dieses entweder über die Authentifizier- und Autorisiereinheit oder unter Umgehung dieser Einheit an den mit dem entsprechenden Internetmarktplatz verbundenen äußeren Konnektor geleitet.

In einer vorteilhaften Ausführungsform der Erfindung ist es dabei vorgesehen, dass das Nutzerberechtigungsprofil in der Autorisier- und Authentifiziereinheit in Abhängigkeit von dem Bearbeitungsergebnis verändert werden kann.

So ist es beispielsweise möglich, Nutzern, die einen bestimmten Frankierdienst häufig in Anspruch nehmen, im Rahmen eines "frequent user program" erweiterte Berechtigungen zuzuordnen, wobei die Autorisier- und Authentifiziereinheit hierfür die Anzahl der an einen bestimmten Nutzer übermittelten Bearbeitungsergebnisse ermittelt.

Der äußere Konnektor nimmt die erforderlichen Formatänderungen vor, die der Formatänderung bei der Bearbeitung der Dienstanforderung in dem äußeren Konnektor entspricht oder unabhängig von dieser vorgegeben ist. Ferner können verschiedene Formatänderungen für das Bearbeitungsergebnis und für die aus dem Bearbeitungsergebnis bestimmte Benachrichtigung an die Streuquelle vorgenommen werden.

Ferner ist es möglich, im Rahmen einer Konvertierung des Bearbeitungsergebnisses in der Transformationseinheit oder im Rahmen der Formatänderung in dem äußeren Konnektor grafische Anpassungen des Bearbeitungsergebnisses vorzunehmen, so dass es an das Erscheinungsbild des Marktplatzes angepasst werden kann. Dies kann insbesondere dann vorgenommen werden, wenn es sich bei dem Bearbeitungsergebnis um eine Webseite mit bestimmten Informationen handelt.

Schließlich übermittelt der äußere Konnektor das Bearbeitungsergebnis an den Computer des Nutzers, von dem die Dienstanforderung stammt.

Zur Administrierung und Überwachung des Servers ist eine Steuerungs- und Berichtseinheit vorgesehen, die von einem Administrator bedient wird. An die Steuerungs- und Berichtseinheit können ein oder mehrere externe Datenverarbeitungsgeräte zur Auswertung von Nutzungsdaten des Servers angeschlossen sein.

Mittels der Steuerungs- und Berichtseinheit können zum einen die Regeln zur Formatänderung in den äußeren Konnektoren und in den inneren Konnektoren, die Regeln für die Authentifizier- und Autorisiereinheit, die Regeln für die intelligente Konvertierung in der Transformationseinheit, sowie die Kriterien für die Prüfung der Bearbeitungsergebnisse in der Prüfeinheit festgelegt werden. Zum anderen sind Steuerungs- und Berichtseinheit in der Lage, die Inanspruchnahme des Servers und der angeschlossenen Anbieterserver durch die Nutzer der Internetmarktplätze festzustellen und in Form von Zugriffstabellen und Statistiken zur Auswertung und Abrechnung bereitzustellen. Sämtliche Administrations- und Auswertungstätigkeiten können dabei auch über die angeschlossenen Datenverarbeitungsgeräte vorgenommen werden.

Ferner können insbesondere Vergleiche zwischen dem Zeitpunkt, in dem eine Dienstanforderung in dem Server empfangen wird und dem Zeitpunkt, in dem das Bearbeitungsergebnis von dem Server abgesendet wird, durchgeführt werden, um so eine Bearbeitungsdauer zu ermitteln und die Einhaltung von Verfügbarkeitszusagen im Einzelfall und statistisch zu überprüfen. Hierzu werden die erforderlichen Informationen zur Auswertung von der Transformationseinheit an die Steuerungs-und Berichtseinheit übertragen und dort bzw. in den Datenverarbeitungsgeräten ausgewertet.

Weiterhin ist es möglich, Zugriffslisten und Statistiken über die Nutzung der Logistikdienste durch den Nutzer zu erstellen.

Der Server zeichnet sich dadurch aus, dass er
- Mittel zur Überprüfung einer Berechtigung des Nutzers enthält,
- Mittel zum Empfangen von Kennungsinformationen des Nutzers aufweist und
- einen Speicher zur Speicherung der Kennungsinformation in einer Positivliste enthält.

Eine Weiterbildung des Servers sieht vor, dass er mit einer Schnittstelle zur Eingabe von versandrelevanten Informationen verbunden ist.

Eine Weiterbildung der Erfindung sieht vor, dass der Server mit einer Schnittstelle zur Eingabe von frankierrelevanten Informationen verbunden ist.

Eine Weiterbildung der Erfindung sieht vor, dass eine Dienstanforderung so konfigurierbar ist, dass sie
- entweder nur versandrelevante Daten überträgt oder
- frankierrelevante Daten ohne Bezahlinformation überträgt oder
- frankierrelevante Daten mit Bezahlinformation überträgt.

Eine Weiterbildung der Erfindung sieht vor, dass die Dienstanforderung eine Information enthält, die mit einem dem Nutzer eindeutig zugeordneten Schlüssel verschlüsselt ist und in der Autorisier- und Authentifiziereinheit entschlüsselbar ist.

Eine Weiterbildung der Erfindung sieht vor, dass das Nutzerberechtigungsprofil in der Dienstanforderung enthalten ist.

Eine Weiterbildung der Erfindung sieht vor, dass das Nutzerberechtigungsprofil mit einem dem Nutzer eindeutig zugeordneten Schlüssel verschlüsselt oder mit einer digitalen Signatur des Nutzers versehen ist.

Eine Weiterbildung der Erfindung sieht vor, dass die dem Frankierdienst übermittelten Daten Informationen aus dem Nutzerberechtigungsprofil enthalten.

Eine Weiterbildung der Erfindung sieht vor, dass die Dienstanforderung in Form eines Parameter-Sets und/oder einer spezifischen Datensyntax übergeben wird.

Eine Weiterbildung der Erfindung sieht vor, dass bei Übermittelung der Kennungsinformationen Versanddaten an den Frankierdienst eine automatische Abbuchung des Portowerts von einem Konto des Käufers erfolgt.

Eine Weiterbildung der Erfindung sieht vor, dass das Versandentgelt automatisch ermittelt wird.

Eine Weiterbildung der Erfindung sieht vor, dass das Versandentgelt in Abhängigkeit von der Einlieferungs- und/oder Absenderadresse ermittelt wird.

Eine Weiterbildung der Erfindung sieht vor, dass eine Berechtigung des Nutzers zum Zugriff auf den Frankierdienst überprüft wird.

Eine Weiterbildung der Erfindung sieht vor, dass die Berechtigung des Nutzers zum Zugriff auf einen Frankierdienst-anhand eines dem Nutzer zugeordneten Marktplatzberechtigungsprofils und/oder anhand eines dem Nutzer zugeordneten Nutzerberechtigungsprofils vorgenommen wird.

Die Erfindung sieht insbesondere vor, dass eine Frankierung oder eine frankierrelevante Transaktion über eine Bedieneinheit angefordert wird, diese Frankier- oder Transaktionsanfrage in einer separaten Berechtigungseinheit authentisiert wird, die eigentliche Frankierung oder frankierrelevante Transaktion von der Berechtigungseinheit gesteuert wird, und das Ergebnis der Frankierung oder der Transaktion zurück übermittelt wird.

Die Erfindung hat den weiteren Vorteil, dass bei Frankierungen und anderen frankierrelevanten Prozessen weitere Authentifizierungsverfahren, die etwa biometrische Verfahren umfassen, eingesetzt werden können.

Ferner ist es vorteilhaft, dass das Ergebnis des Transaktionsauftrages an die Berechtigungseinheit übermittelt wird und dass die Berechtigungseinheit eine das Ergebnis der Durchführung des Transaktionsauftrags enthaltende Nachricht an die Bedieneinheit und/oder eine Druckeinheit übermittelt.

Bei der Bedieneinheit und der Druckeinheit kann es sich sowohl um getrennte Geräte als auch um eine gemeinsame Einheit handeln.

Ein Beispiel für getrennte Geräte sind ein Personalcomputer und ein Drucker, der beispielsweise direkt oder über ein Computernetzwerk mit dem Personalcomputer verbunden ist.

Eine Realisierung der Bedieneinheit und der Druckeinheit als eine gemeinsame Einheit kann beispielsweise durch eine erfindungsgemäß gestaltete Frankiereinheit, beispielsweise eine Frankiermaschine oder eine andere Einheit mit wenigstens einem kryptographischen Modul erfolgen.

Eine weitere gleichfalls vorteilhafte Ausführungsform der Erfindung zeichnet sich dadurch aus, dass die Frankiereinheit das Ergebnis der Durchführung des Transaktionsauftrags an die Berechtigungseinheit sendet und dass die Berechtigungseinheit eine das Ergebnis der Durchführung des Transaktionsauftrages enthaltende Nachricht an die Bedieneinheit und/oder die Druckeinheit übermittelt.

Die Erfindung sieht eine besonders vorteilhafte Ausgestaltung einer Modularität eines Frankiersystems vor. Zusätzlich zu dem Vorzug der Kennungsinformationen von System und Komponenten, diese unabhängig voneinander entwickeln und einsetzen zu können, tritt der besondere Vorteil einer besonderen Flexibilität zum Einsatz des Frankiersystems durch eine Vielzahl von Nutzern.

Eine besonders bevorzugte Ausführungsform der Erfindung zeichnet sich dadurch aus, dass die Transaktionsanfrage von der Bedieneinheit an die Berechtigungseinheit übermittelt wird, dass die Transaktionsanfrage in der Berechtigungseinheit authentisiert wird und dass die Berechtigungseinheit anschließend einen authentisierten Transaktionsauftrag an die Frankiereinheit übermittelt.

Ein spezieller Vorteil der erfindungsgemäßen Trennung der Komponenten in Frankiersystemen besteht darin, dass ein sog. kryptographisches Modul eingesetzt werden kann, in dem Prozesse durchgeführt werden, die die Fälschungssicherheit der erzeugten Frankiervermerke erhöhen. Dieses kryptographische Modul besteht vorzugsweise aus einer separaten Hardware und Software. Aufgabe dieser Hard-und Software ist es, geheime oder sonstige wichtige Daten zugriffs- und manipulationssicher zu speichern und kryptographische Operationen wie Verschlüsselungen oder Signaturen in einer gesicherten Umgebung durchzuführen. Kryptographische Module, wie sie z.B. im öffentlichen Standard FIPS 140-2 der USamerikanischen Standardisierungsbehörde NIST (siehe www.nist.gov) festgelegt sind, zeichnen sich dadurch aus, dass jede Manipulation am Modul erkannt wird, die Unterbrechung der Operationen und die Löschung der Inhalte zur Folge hat und ggf. auch die Zerstörung des Moduls bewirkt. Nur deshalb, weil es für einen in missbräuchlicher Absicht agierenden Nutzer eines modernen Frankiersystems nicht möglich ist, die im kryptographischen Modul ablaufenden Frankierprozesse zu beeinflussen oder nachzuahmen, können mit elektronischen Frankiersystemen fälschungssichere Frankiervermerke erstellt werden.

Um die Funktionen des kryptographischen Moduls besonders wirksam nutzen zu können, ist es zweckmäßig, die für die Bedienung des Frankiersystems erforderlichen Schnittstellen zur Nutzer-Interaktion in einer separaten Einheit unterzubringen. Hierdurch sind bei modernen Frankiersystemen, mit denen fälschungssichere Frankiervermerke erzeugt werden können, die Bedieneinheit und die aus dem kryptographischen Modul bestehende Frankiereinheit voneinander getrennt.

Ein weiterer Vorteil der Trennung von Bedien- und Frankiereinheit besteht darin, dass diese räumlich getrennt werden können, wobei die Verbindung zwischen der Bedieneinheit (Nutzer-PC) und der Frankiereinheit (u.a, kryptographisches Modul) über ein Datennetz hergestellt wird.

Der praktische Vorteil dieser räumlichen Trennung von Bedien- und Frankiereinheit besteht darin, dass eine Erstellung fälschungssicherer Frankiervermerke am PC ohne Einsatz eines vor Ort am PC betriebenen kryptographischen Moduls möglich ist. Stattdessen wird das Modul kostengünstig zentral betrieben und von allen Frankiernutzern bei Bedarf benutzt.

Ein weiterer Vorteil der Erfindung ist, dass sie einen Einsatz verschiedener Verfahren zur Nutzerauthentifizierung ermöglicht. Um sicherzustellen, dass eine Erstellung der geldwerten Frankiervermerke nur durch berechtigte Nutzer erfolgt, werden Frankiersysteme i.d.R. mit einer Zugangssicherung ausgestattet. Im einfachsten Fall besteht eine derartige Sicherung aus einem Geheimcode, der bei der Aktivierung des Systems eingegeben werden muss. Das Verfahren des Geheimcodes wird u.a. eingesetzt, um elektronische Freistempelmaschinen abzusichern.

Ferner ist es zweckmäßig, eine Paarung zwischen Nutzeridentifizierung und NutzerAuthentifizierung einzusetzen. Dies erfolgt beispielsweise durch Eingabe eines Nutzernamens (dies dient der Identifizierung) und eines Kennworts (dies dient der Authentifizierung). Die Sicherung basiert dabei darauf, dass nur der berechtigte Nutzer das Wissen über das Kennwort besitzt.

Neben der wissensbasierten Sicherung eignen sich auch andere Authentifizierungsverfahren, die entweder den zusätzlichen Besitz einer Sache erfordern oder auf biometrische Merkmale des Nutzers abzielen.

Eine Authentifizierung durch einen Besitz einer Sache wird beispielsweise bei Sicherungssystemen verwendet, die auf Mikroprozessor-Chipkarten, sog. SmartCards, basieren. Im Sinne eines kryptographischen Moduls werden auf einer Chipkarte Daten gespeichert oder Operationen durchgeführt, die nicht auslesbar oder manipulierbar sind. Weil derartige Karten nicht fälschbar oder nachahmbar sind, können sie insbesondere zur sicheren Identifizierung herangezogen werden. Zusätzlich zu einer solchen Identifizierung der Chipkarte werden regelmäßig Kennwörter oder PINs (Persönliche Identifizierungs-Nummem) zur Authentifizierung des rechtmäßigen Besitzers verwendet.

Weitere vorteilhafte Verfahren der Authentifizierung basieren auf dem Auslesen biometrischer Merkmale des rechtmäßigen Nutzers. Ziel ist es, mit dem Abtasten unveränderlicher und einmaliger biometrischer Merkmale - wie etwa den Fingerabdruck oder die Iris-Musterung - zu erfassen, ob es sich um einen berechtigten Nutzer handelt. Weil die Komponenten des Wissens und des Besitzes entfallen können, werden biometrische Verfahren als besonders einfache, sichere und somit zukunftsträchtige Authentifizierungsverfahren angesehen.

Erfindungsgemäß können auch weitere Angaben zur Identifizierung und Authentifizierung herangezogen werden,

Beispielsweise ist es zweckmäßig, eine Kontonummer eines Portokontos, von dem Portowerte geladen werden können, als Ideritifizierungsrnerkmal zu verwenden.

Die Authentifizierung des Zugriffs auf das Portokonto erfolgt beispielsweise über Eingabe eines Kennworts.

Die Informationen zur Identifizierung und Authentifizierung werden in der Berechtigungseinheit genutzt, um anhand der Kontonummer das entsprechende Portokonto im sicheren kryptographischen Modul auszuwählen und es mit dem Kennwort zu aktivieren. Während die Kontonummer als identifizierendes Merkmal "außen" am kryptographischen Modul sichtbar sein muss, wird das Kennwort innerhalb des kryptographischen Moduls geprüft. Die Prüfung erfolgt innerhalb des Moduls, weil das eingegebene Kennwort (oder ein Abbild des Kennworts) mit einem hinterlegten Kennwort (oder seinem entsprechenden Abbild) verglichen wird. Um zu verhindern, dass Dritte das hinterlegte Kennwort (oder dessen Abbild) auslesen, erfolgt die Speicherung innerhalb des kryptographischen Moduls der Frankiereinheit.

In dem kryptographischen Modul der Frankiereinheit erfolgt zweckmäßigerweise die Authentifizierung der Berechtigungseinheit und/oder des Nutzers.

Es ist zweckmäßig, diese Authentifizierung für Berechtigungen zum Erstellen von Frankiervermerken und/oder für Zugriffe auf Informationen zu der Postsendung einzusetzen.

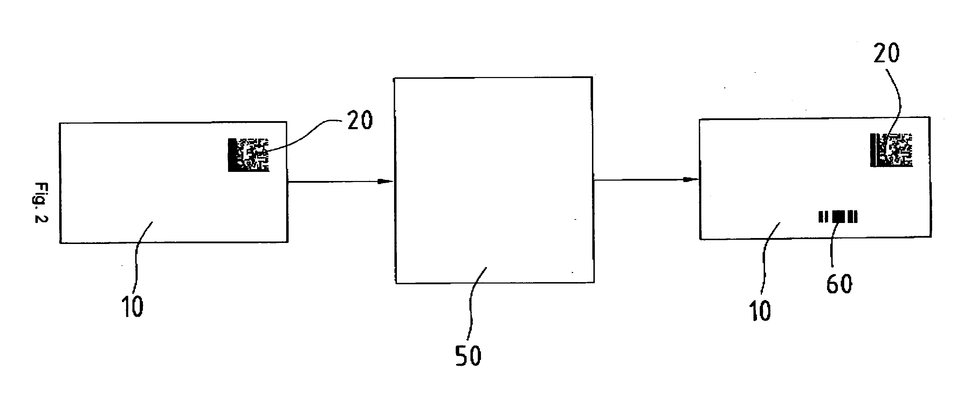

Bei einem Einsatz kryptographisch abgesicherter Frankiervermerke ist es besonders zweckmäßig, diese für eine Entgeltüberprüfung und/oder Abrechnung der Postsendung - insbesondere im Bereich der ersten Bearbeitungseinheit 50 - einzusetzen. Eine schematische Darstellung der Bearbeitungseinheit 50 findet sich in Fig. 2.

### Bezugszeichenliste:

- 1: Drucker
- 2: Nutzercomputer
- 10: Postsendung
- 20: erster Code
- 30: Server
- 40: Einlieferungsstelle
- 50: Vorrichtung, erste Bearbeitungseinheit
- 60: zweiter Code
- 70: Vorrichtung, zweite Bearbeitungseinheit

## Patentansprüche

1. Verfahren zum Befördern einer Postsendung (10) wobei ein erster maschinenlesbarer Code (20) auf die Postsendung (10) aufgebracht wird und wobei der maschinenlesbare Code (20) durch mindestens eine Leseeinheit erfasst wird,
**dadurch gekennzeichnet,**
**dass** ein zweiter maschinenlesbarer Code (60) auf die Postsendung (10) aufgebracht wird und dass eine Information zu einer Verknüpfung zwischen dem ersten Code (20) und dem zweiten Code (60) in einem Datenverarbeitungssystem insbesondere einem Server (30), gespeichert wird.

2. Verfahren nach Anspruch 1,
**dadurch gekennzeichnet,**
**dass** der erste Code (20) eine ldentifizierungsinformation beinhaltet.

3. Verfahren nach einem der vorangegangenen Ansprüche,
**dadurch gekennzeichnet,**
**dass** der zweite Code (60) eine Identifizierungsinformation beinhaltet.

4. Verfahren nach einem der vorangegangenen Ansprüche,
**dadurch gekennzeichnet,**
**dass** der erste Code (20) und der zweite Code (60) in voneinander getrennten Bearbeitungsvorgängen auf die Postsendung (10) aufgebracht werden.

5. Verfahren nach Anspruch 4,
**dadurch gekennzeichnet,**
**dass** zwischen dem Aufbringen des ersten Codes (20) und dem Aufbringen des zweiten Codes (60) eine Beförderung der Postsendung (10) erfolgt.

6. Verfahren nach einem der vorangegangenen Ansprüche,
**dadurch gekennzeichnet,**
**dass** der erste Code (20) eine Kennzeichnung beinhaltet, die ihn von dem zweiten Code (60) unterscheidet.

7. Verfahren nach einem der vorangegangenen Ansprüche,
**dadurch gekennzeichnet,**
**dass** der zweite Code (60) eine Kennzeichnung beinhaltet, die ihn von dem ersten Code (20) unterscheidet.

8. Verfahren nach einem der vorangegangenen Ansprüche,
**dadurch gekennzeichnet,**
**dass** der erste Code (20) von einem anderen Codetyp ist als der zweite Code (60).

9. Verfahren nach Anspruch 8,
**dadurch gekennzeichnet,**
**dass** der erste Code (20) ein Data-Matrix-Code ist.

10. Verfahren nach einem der Ansprüche 8 oder 9,
**dadurch gekennzeichnet,**
**dass** der zweite Code (60) ein Linearcode ist.

11. Verfahren nach Anspruch 8,
**dadurch gekennzeichnet,**
**dass** der erste Code (20) in einem Transponder gespeichert wird,

12. Verfahren nach Anspruch 8,
**dadurch gekennzeichnet,**
**dass** der zweite Code (60) in einem Transponder gespeichert wird.

13. Verfahren nach einem der vorangegangenen Ansprüche,
**dadurch gekennzeichnet,**
**dass** der erste Code (20) in einer Bearbeitungseinheit (50) erfasst wird.

14. Verfahren nach einem der vorangegangenen Ansprüche,
**dadurch gekennzeichnet,**
**dass** der zweite Code (60) in einer Bearbeitungseinheit (50) erfasst wird.

15. Verfahren nach den Ansprüchen 13 und 14,
**dadurch gekennzeichnet,**
**dass** der erste Code (20) in einer anderen Bearbeitungseinheit erfasst wird als der zweite Code (60).

16. Verfahren nach den Ansprüchen 13 und 14,
**dadurch gekennzeichnet,**
**dass** der erste Code (20) und der zweite Code (60) der Postsendung (10) in einer gleichen Bearbeitungseinheit erfasst werden.

17. Verfahren nach Anspruch 16,
**dadurch gekennzeichnet,**
**dass** die Verknüpfung zwischen dem ersten Code (20) und dem zweiten Code (60) unter Berücksichtigung einer Erfassung des ersten Codes (20) und des zweiten Codes (60) in der gleichen Bearbeitungseinheit erfolgt.

18. Verfahren nach einem der Ansprüche 2 bis 17,
**dadurch gekennzeichnet,**
**dass** unter Berücksichtigung der Identifizierungsinformation ein Datensatz mit Daten zur Identifizierung der Postsendung (10) angelegt oder verändert wird.

19. Verfahren nach einem der vorangegangenen Ansprüche,
**dadurch gekennzeichnet,**
**dass** der erste Code (20) zeitlich vor dem zweiten Code auf die Postsendung (10) aufgebracht wird.

20. Verfahren nach einem der Ansprüche 1 bis 18,
**dadurch gekennzeichnet,**
**dass** der zweite Code (60) und der erste Code (20) gleichzeitig auf die Postsendung (10) aufgebracht werden.

21. Verfahren nach einem der Ansprüche 1 bis 18,
**dadurch gekennzeichnet,**
**dass** der zweite Code (60) zeitlich vor dem ersten Code (20) auf die Postsendung (10) aufgebracht wird.

22. Verfahren nach einem der vorangegangenen Ansprüche,
**dadurch gekennzeichnet,**
**dass** der Datensatz mit den Daten zur Identifizierung der Postsendung (10) bei Einlieferung der Postsendung (10) in einem Bearbeitungsverlauf von Postsendungen (10) angelegt oder verändert wird.

23. Verfahren nach Anspruch 22,
**dadurch gekennzeichnet,**
**dass** der Datensatz oder wenigstens ein Teil davon einem Nutzer zur Verfügung gestellt wird.

24. Verfahren nach Anspruch 23,
**dadurch gekennzeichnet,**
**dass** der Datensatz auf einem Server (30) hinterlegt wird.

25. Verfahren nach einem der vorangegangenen Ansprüche,
**dadurch gekennzeichnet,**
**dass** der Datensatz mit Informationen über einen Beförderungszustand der Postsendung (10) verknüpft wird.

26. Verfahren nach Anspruch 25,
**dadurch gekennzeichnet,**
**dass** der Beförderungszustand der Postsendung (10) unter Berücksichtigung einer Erfassung des ersten Codes (20) ermittelt wird.

27. Verfahren nach einem der Ansprüche 25 oder 26,
**dadurch gekennzeichnet,**
**dass** der Beförderungszustand unter Berücksichtigung einer Erfassung des zweiten Codes (60) ermittelt wird.

28. Verfahren nach einem der Ansprüche 25 bis 27,
**dadurch gekennzeichnet,**
**dass** der Beförderungszustand unter Berücksichtigung der Verknüpfung zwischen dem ersten Code (20) und dem zweiten Code (60) ermittelt wird.

29. Verfahren nach einem der vorangegangen Ansprüche,
**dadurch gekennzeichnet,**
**dass** der erste Code mit einer ersten Erfassungsart erfassbar ist und dass der zweite Code mit einer davon verschiedenen zweiten Erfassungsart erfassbar ist.

30. Verfahren nach Anspruch 29,
**dadurch gekennzeichnet,**
**dass** eine der Erfassungsarten ein Erfassen von graphisch darstellbaren Code-Bestandteilen beinhaltet.

31. Verfahren nach einem der Ansprüche 29 oder 30,
**dadurch gekennzeichnet,**
**dass** eine andere der Erfassungsarten ein Erfassen von Transpondersignalen beinhaltet.

32. Vorrichtung (50) zur Bearbeitung von Postsendungen (10) mit einem Mittel zum Erfassen eines ersten auf eine Postsendung (10) aufgebrachten maschinenlesbaren Codes (20),
**dadurch gekennzeichnet,**
**dass** die Vorrichtung (50) ein Mittel zum Erfassen wenigstens eines Teils des ersten maschinenlesbaren Codes (20) enthält, dass die Vorrichtung (50) ferner ein Mittel zum Versehen der Postsendung (10) mit einem zweiten maschinenlesbaren Code (60) enthält und dass die Vorrichtung (50) ferner ein Zuordnungsmittel aufweist, dass eine Verknüpfung des ersten Codes (20) mit dem zweiten Code (60) ermöglicht und dass die Vorrichtung (50) ferner mit einer Schnittstelle zum Übertragen der Verknüpfungsinformation an einen Server ausgestattet ist.

33. Logistiksystem mit Mitteln zum Befördern einer Postsendung (10) von einem Abgangsort zu einem Zielort,
**dadurch gekennzeichnet,**
**dass** das Logistiksystem ein Mittel zum Befördern einer Postsendung (10) zu einer Vorrichtung (50) enthält, wobei die Vorrichtung (50) ein Mittel zum Erfassen wenigstens eines Teils eines ersten maschinenlesbaren Codes (20) und ein Mittel zum Versehen der Postsendung (10) mit einem zweiten maschinenlesbaren Code (60) enthält und dass das Logistiksystem ein Zuordnungsmittel beinhaltet, dass eine Verknüpfung des ersten Codes (20) mit dem zweiten Code (60) ermöglicht und dass das Logistiksystem ferner einen Server (30) beinhaltet, der so ausgestattet ist, dass er einen Datensatz zur Identifizierung der Postsendung (10) und / oder Informationen über einen Beförderungszustand der Postsendung (10) bereitstellen kann.

34. Logistiksystem nach Anspruch 33,
**dadurch gekennzeichnet,**
**dass** es wenigstens eine Vorrichtung (50) zur Bearbeitung von Postsendungen (10) nach Anspruch 32 enthält.

35. Logistiksystem nach einem der Ansprüche 33 oder 34,
**dadurch gekennzeichnet,**
**dass** es mehrere Vorrichtungen (40, 50, 70) mit Mitteln zum Erfassen des ersten Codes und/oder des zweiten Codes (20, 60) enthält und dass der Server so ausgestattet ist, dass er Mittel zum Empfangen von Informationen der Vorrichtungen enthält.

36. Logistiksystem nach einem der Ansprüche 33 bis 35,
**dadurch gekennzeichnet,**
**dass** es wenigstens eine erste Vorrichtung (40, 50) mit einem Mittel zum Erfassen wenigstens eines Teils des ersten maschinenlesbaren Codes (20) enthält, dass es ferner wenigstens eine zweite Vorrichtung (70) zum Erfassen wenigstens eines Teil des zweiten maschinenlesbaren Codes (60) enthält und dass der in dem Logistiksystem beinhaltete Server (30) so ausgestattet ist, dass er ein Mittel zum Empfangen von Informationen von der ersten Vorrichtung und zum Empfangen von Informationen von der zweiten Vorrichtung enthält.

37. Logistiksystem nach einem der Ansprüche 33 bis 36,
**dadurch gekennzeichnet,**
**dass** es ein Speichermittel enthält, in dem eine Verknüpfung zwischen Informationen zu dem ersten maschinenlesbaren Code (20) und dem zweiten maschinenlesbaren Code (60) gespeichert ist und dass es ein Mittel zur Bereitstellung von Informationen zu der Postsendung unter Berücksichtigung dieser Verknüpfung beinhaltet.

38. Logistiksystem nach einem der Ansprüche 33 bis 37,
**dadurch gekennzeichnet,**
**dass** es mindestens zwei Transportabschnitte umfasst und dass in einem Transportabschnitt eine Erfassung des ersten Codes mit einer ersten Erfassungsart erfolgt und dass in einem weiteren Beförderungsabschnitt eine Erfassung des zweiten Codes mit einer zweiten Erfassungsart erfolgt.
